# EUROPEAN PATENT SPECIFICATION

(11) **EP 4 560 506 B1**
(45) Date of publication and mention of the grant of the patent: **28.10.2026**
(21) Application number: 23910643.8
(22) Date of filing: 26.12.2023
(51) Int. Cl.: G06F 21/51, G06F 8/60, G06F 21/57, H04L 9/40

(54) **INTERCEPT METHOD, SYSTEM, AND RELATED APPARATUS**
ABFANGVERFAHREN, SYSTEM UND ZUGEHÖRIGE VORRICHTUNG
PROCÉDÉ D'INTERCEPTION, SYSTÈME ET APPAREIL ASSOCIÉ

(30) Priority: 28.12.2022 CN 202211698044
(43) Date of publication of application: 28.05.2025
(73) Proprietor: Huawei Technologies Co., Ltd., Shenzhen, Guangdong 518129 (CN)
(72) Inventor: LIU, Hui, Shenzhen, Guangdong 518129 (CN)
(74) Representative: Pfenning, Meinig & Partner mbB
(86) International application number: PCT/CN2023/142068
(87) International publication number: WO 2024/140720

(56) References cited:
- CN-A- 103 778 367
- CN-A- 106 485 139
- CN-A- 106 485 139
- CN-A- 106 778 229
- CN-A- 108 460 273
- CN-A- 112 765 597
- CN-A- 113 468 863
- KR-B1- 101 286 711
- US-A1- 2013 283 377
- US-A1- 2014 096 246
- US-A1- 2015 371 043
- US-A1- 2021 157 922

## Description

### TECHNICAL FIELD

This application relates to the field of internet technologies, and in particular, to an interception method, an electronic device and a computer-readable storage medium.

### BACKGROUND

With continuous development of internet technologies, people's daily life is increasingly closely related to the internet. When browsing a web page by using an electronic device, a user usually downloads and installs applications (applications, APPs), and these applications may be risky applications. If the risky application is installed and run on the electronic device of the user, the user's rights may be compromised. To protect the user's rights, the electronic device needs to identify and intercept the risky application, and prevent the risky application from being installed on the electronic device of the user.

The electronic device may send a download website address of a target application to a server, and the server compares the received download website address with download website addresses of a plurality of risky applications stored in a risky application database, to determine a detection result. The detection result indicates whether the target application is a risky application. After determining the detection result, the server may return the detection result to the electronic device. The electronic device may determine, based on the detection result, whether the target application is a risky application. When determining that the target application is a risky application, the electronic device may reject to install the target application.

However, because the website address may change frequently, missed identifying or missed interception may easily occur in the foregoing manner.

US 2021/157922 A1 describes application management methods with verification messages preventing installation of unverified applications. US 2014/096246 A1 describes systems, methods and routine to prevent installation of an application package. CN 106 485 139 A provides a method for secure authentication of an application program.

### SUMMARY

This application provides an interception method, an electronic device and a computer-readable storage medium to determine a risk of a target application in a process of downloading an installation package of the target application. In addition, when the target application has a security risk, an electronic device may further stop downloading the installation package of the target application. The application provides an interception method, an electronic device and a computer-readable storage medium according to the appending claims.

According to a first aspect, this application provides an interception method, including: An electronic device receives a first operation of downloading a first target application; the electronic device obtains a first download address of the first target application in response to the first operation; the electronic device downloads a first installation package of the first target application from a first download server based on the first download address; the electronic device obtains first data of the first installation package; the electronic device sends the first data to an interception server; the electronic device receives a first detection result sent by the interception server, where the first detection result is a result of detecting the first target application based on the first data; and the electronic device outputs a first notification message, where the first notification message is used to notify a user of risk information of the first target application.

In this way, whether the target application has a security risk (that is, whether the target application is a risky application) can be determined in the download process, so that traffic and time consumption can be reduced, and algorithm efficiency can be improved.

In a possible implementation, that the electronic device obtains first data of the first installation package specifically includes: When the electronic device detects that a data length of downloaded data in the first installation package reaches a preset length, the electronic device determines the first data based on the downloaded data.

In a possible implementation, the first data is the downloaded data or a hash value of the downloaded data.

In a possible implementation, the first detection result is a result of detecting the first target application by the interception server based on a risky application database and the first data.

In this way, the interception server may determine, based on the risky application database stored in the interception server and the first data, whether the target application has a security risk.

In a possible implementation, the method further includes: The electronic device sends the first download address to the interception server, where the first detection result is a result of detecting the first target application based on the first data and the first download address.

In this way, the interception server may determine a risk of the target application based on the download address and the first data, to obtain a more accurate detection result.

In a possible implementation, before the electronic device obtains the first data of the first installation package, the method further includes: The electronic device sends the first download address to the interception server; and the electronic device receives a second detection result sent by the interception server, where the second detection result is a result of detecting the first target application based on the first download address, and the second detection result indicates that the first target application has no security risk.

In this way, the risk of the target application may be first determined based on the download address.

In a possible implementation, if the first target application has a security risk, the first notification message is used to notify the user that the first target application has a security risk. The method further includes: The electronic device stops downloading the first installation package.

In a possible implementation, if the first target application has a security risk, the first notification message is used to notify the user that the first target application has a security risk. The method further includes: The electronic device deletes the downloaded data in response to a second operation performed on the first notification message; or the electronic device deletes the downloaded data if no operation performed by the user on the first notification message is received within preset duration.

The electronic device stores a local risk database. If the first target application has a security risk, the electronic device adds the first data and/or the first download address to the local risk database.

In this way, the local risk database can be updated in a timely manner.

In a possible implementation, if the first target application has no security risk, the first notification message indicates that the first target application has no security risk.

In a possible implementation, the electronic device stores a local risk database. The method further includes: The electronic device receives a third operation of downloading a second target application; the electronic device obtains a second download address of the second target application in response to the third operation; the electronic device downloads a second installation package of the second target application from a second download server based on the second download address; the electronic device obtains second data of the second installation package; and the electronic device outputs a second notification message when the electronic device determines, based on the second data, the second download address, and the local risk database, that the second target application has a security risk, where the second notification message is used to notify the user that the second target application has a security risk.

In this way, whether the target application has a security risk may be first determined based on the local risk database stored in the electronic device. If it is determined that a risk exists, the interception server does not need to perform determining; or if it is determined that no risk exists, the interception server performs determining.

In a possible implementation, when the electronic device determines, based on the second data, the second download address, and the local risk database, that the second target application has no security risk, the method further includes: The electronic device sends the second data to the interception server; the electronic device receives a fourth detection result sent by the interception server, where the fourth detection result is a result of detecting the second target application based on the second data; and the electronic device outputs a third notification message, where the third notification message is used to notify the user of risk information of the second target application.

According to a second aspect, this application provides an interception method, applied to a communication system including an electronic device and an interception server, and including: The electronic device receives a first operation of downloading a first target application; the electronic device obtains a first download address of the first target application in response to the first operation; the electronic device downloads a first installation package of the first target application from a first download server based on the first download address; the electronic device obtains first data of the first installation package; the electronic device sends the first data to the interception server; the interception server receives the first data; the interception server determines a first detection result of the first target application based on the first data, where the first detection result indicates whether the first target application has a security risk; the interception server sends the first detection result to the electronic device; the electronic device receives the first detection result sent by the interception server; and the electronic device outputs a first notification message, where the first notification message is used to notify a user of risk information of the first target application.

In a possible implementation, that the electronic device obtains first data of the first installation package specifically includes: When the electronic device detects that a data length of downloaded data in the first installation package reaches a preset length, the electronic device determines the first data based on the downloaded data.

In a possible implementation, the first data is the downloaded data or a hash value of the downloaded data.

In a possible implementation, the interception server stores a risky application database. That the interception server determines a first detection result based on the first data specifically includes: The interception server determines the first detection result based on the first data and the risky application database.

If the interception server determines that the risky application database includes the first data, the interception server determines that the first detection result is that the first target application has a security risk. If the interception server determines that the risky application database does not include the first data, the interception server determines that the first detection result is that the first target application has no security risk.

In a possible implementation, the method further includes: The electronic device sends the first download address to the interception server; the interception server receives the first download address; and the interception server determines the first detection result of the first target application based on the first download address and the first data.

In a possible implementation, before the electronic device obtains the first data of the first installation package, the method further includes: The electronic device sends the first download address to the interception server; the interception server receives the first download address; and the interception server determines a second detection result of the first target application based on the first download address, where the second detection result indicates that the first target application has no security risk.

In a possible implementation, if the first target application has a security risk, the first notification message is used to notify the user that the first target application has a security risk. The method further includes: The electronic device stops downloading the first installation package.

In a possible implementation, if the first target application has a security risk, the first notification message is used to notify the user that the first target application has a security risk. The method further includes: The electronic device deletes the downloaded data in response to a second operation performed on the first notification message; or the electronic device deletes the downloaded data if no operation performed by the user on the first notification message is received within preset duration.

In a possible implementation, the electronic device stores a local risk database. If the first target application has a security risk, the electronic device adds the first data and/or the first download address to the local risk database.

In a possible implementation, if the first target application has no security risk, the first notification message indicates that the first target application has no security risk.

In a possible implementation, the electronic device stores a local risk database. The method further includes: The electronic device receives a third operation of downloading a second target application; the electronic device obtains a second download address of the second target application in response to the third operation; the electronic device downloads a second installation package of the second target application from a second download server based on the second download address; the electronic device obtains second data of the second installation package; and the electronic device outputs a second notification message when the electronic device determines, based on the second data, the second download address, and the local risk database, that the second target application has a security risk, where the second notification message is used to notify the user that the second target application has a security risk.

In a possible implementation, when the electronic device determines, based on the second data, the second download address, and the local risk database, that the second target application has no security risk, the method further includes: The electronic device sends the second data to the interception server; the interception server receives the second data; the interception server determines a fourth detection result of the second target application based on the second data, where the fourth detection result indicates whether the second target application has a security risk; the interception server sends the fourth detection result to the electronic device; the electronic device receives the fourth detection result sent by the interception server, where the fourth detection result is a result of detecting the second target application based on the second data; and the electronic device outputs a third notification message, where the third notification message is used to notify the user of risk information of the second target application.

According to a third aspect, this application provides an electronic device, including a risk interception module and a data obtaining module. The data obtaining module is configured to: receive a first operation of downloading a first target application, and obtain a first download address of the first target application in response to the first operation. The data obtaining module is configured to download a first installation package of the first target application from a first download server based on the first download address. The data obtaining module is configured to obtain first data of the first installation package.

The risk interception module includes a communication module and an output module. The communication module is configured to send the first data to an interception server. The communication module is further configured to receive a first detection result sent by the interception server, where the first detection result is a result of detecting the first target application based on the first data. The output module is further configured to output a first notification message, where the first notification message is used to notify a user of risk information of the first target application.

In a possible implementation, that the data obtaining module is configured to obtain first data of the first installation package specifically includes: When the data obtaining module detects that a data length of downloaded data in the first installation package reaches a preset length, the data obtaining module is configured to determine the first data based on the downloaded data.

In a possible implementation, the first data is the downloaded data or a hash value of the downloaded data.

In a possible implementation, the first detection result is a result of detecting the first target application by the interception server based on a risky application database and the first data.

In a possible implementation, the communication module is further configured to send the first download address to the interception server, where the first detection result is a result of detecting the first target application based on the first data and the first download address.

In a possible implementation, before obtaining the first data of the first installation package, the communication module is further configured to send the first download address to an interception server. The communication module is further configured to receive a second detection result sent by the interception server, where the second detection result is a result of detecting the first target application based on the first download address, and the second detection result indicates that the first target application has no security risk.

In a possible implementation, if the first target application has a security risk, the first notification message is used to notify the user that the first target application has a security risk. The data obtaining module is further configured to stop downloading the first installation package.

In a possible implementation, if the first target application has a security risk, the first notification message is used to notify the user that the first target application has a security risk. The data obtaining module is further configured to delete the downloaded data in response to a second operation performed on the first notification message; or the data obtaining module is further configured to delete the downloaded data if no operation performed by the user on the first notification message is received within preset duration.

In a possible implementation, the interception module further includes a local database module. The local database module is configured to store a local risk database. If the first target application has a security risk, the local database module is configured to add the first data and/or the first download address to the local risk database.

In a possible implementation, if the first target application has no security risk, the first notification message indicates that the first target application has no security risk.

In a possible implementation, the interception module further includes a local database module and a pre-determining module. The local database module is configured to store a local risk database. The data obtaining module is further configured to: receive a third operation of downloading the second target application, and obtain a second download address of a second target application in response to the third operation. The data obtaining module is further configured to download a second installation package of the second target application from a second download server based on the second download address. The data obtaining module is further configured to obtain second data of the second installation package. The pre-determining module is configured to determine, based on the second data, the second download address, and the local risk database, whether the second target application has a security risk.

When the pre-determining module determines that the second target application has a security risk, the output module is configured to output a second notification message, where the second notification message is used to notify the user that the second target application has a security risk.

In a possible implementation, when the pre-determining module determines that the second target application has no security risk, the communication module is further configured to send the second data to the interception server. The communication module is further configured to receive a fourth detection result sent by the interception server, where the fourth detection result is a result of detecting the second target application based on the second data. The output module is further configured to output a third notification message, where the third notification message is used to notify the user of risk information of the second target application.

According to a fourth aspect, this application provides a communication system, including an electronic device and an interception server. When the electronic device downloads an installation package of an application, the electronic device is enabled to perform the interception method on the electronic device side according to any possible implementation of any one of the foregoing aspects, and the interception server is enabled to perform the interception method on the interception server side according to any possible implementation of the second aspect.

According to a fifth aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the interception method according to any possible implementation of any one of the foregoing aspects.

According to a sixth aspect, an embodiment of this application provides a computer storage medium, including computer instructions. When the computer instructions are run on an electronic device, the electronic device is enabled to perform the interception method according to any possible implementation of any one of the foregoing aspects.

According to a seventh aspect, an embodiment of this application provides a computer program product. When the computer program product is run on a computer, the computer is enabled to perform the interception method according to any one of the possible implementations of the foregoing aspects.

### BRIEF DESCRIPTION OF DRAWINGS

FIG. 1 is a diagram of a system architecture of a communication system according to an embodiment of this application;
FIG. 2 is a diagram of a hardware structure of an electronic device 100 according to an embodiment of this application;
FIG. 3 is a diagram of a hardware structure of a server 200 according to an embodiment of this application;
FIG. 4A to FIG. 4G are diagrams of a group of interfaces in an interception method according to an embodiment of this application;
FIG. 5A and FIG. 5B are diagrams of a group of interfaces of a manner of downloading a target application according to an embodiment of this application;
FIG. 6A to FIG. 6C are diagrams of another group of interfaces of a manner of downloading a target application according to an embodiment of this application;
FIG. 7 is a schematic flowchart of an interception method according to an embodiment of this application;
FIG. 8A and FIG. 8B are diagrams of a relationship between an installation package of a target application, downloaded data, and sampling data according to an embodiment of this application;
FIG. 8C is a diagram of a hash operation according to an embodiment of this application;
FIG. 9A and FIG. 9B are a schematic flowchart of another interception method according to an embodiment of this application;
FIG. 10 is a diagram of functional modules of a system 2000 according to an embodiment of this application; and
FIG. 11 is a diagram of functional modules of a system 3000 according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be recognized by the user. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of the electronic device.

In the following embodiments of this application, a risky application is an application that has a security risk. If the target application is a risky application, it indicates that the target application has a security risk. On the contrary, if the target application is a non-risky application, it indicates that the target application has no security risk.

An embodiment of this application provides a system architecture of a communication system having an interception function.

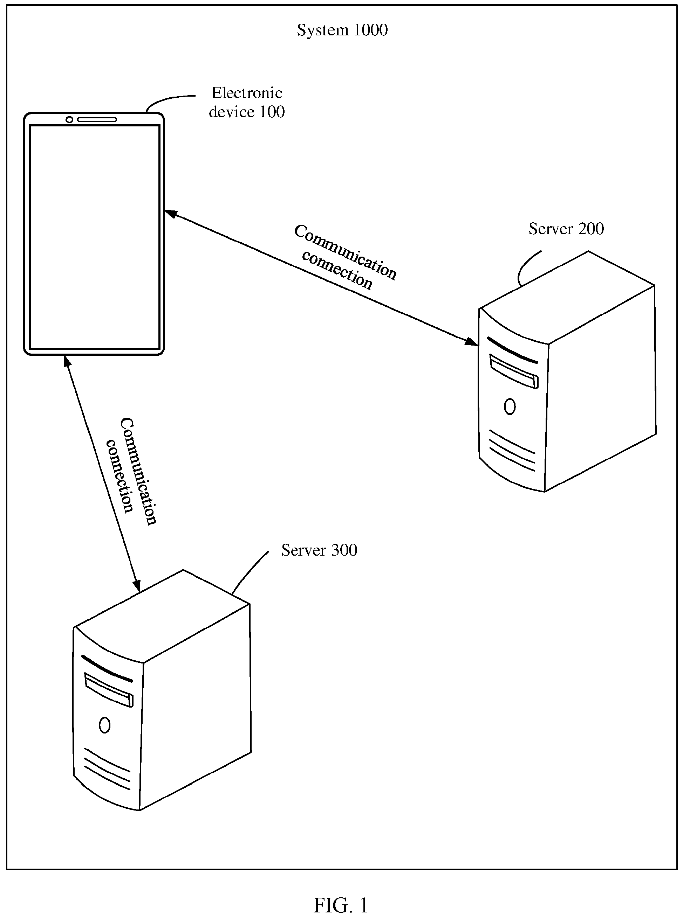

As shown in FIG. 1, a system 1000 includes one or more electronic devices 100, a server 200, and a server 300. A communication connection is established between the electronic device 100 and the server 200, and a communication connection is also established between the electronic device 100 and the server 300.

One or more applications (applications, APPs) may be installed on the electronic device 100, and the one or more applications may include a browser application. The electronic device 100 may provide a web page browsing service for a user through the browser application. In some embodiments, the electronic device 100 may also provide services such as a video playing service, an audio playing service, and a game service for the user through other applications.

The electronic device 100 may receive an operation of downloading a target application by the user, determine a uniform resource locator (uniform resource locator, URL, also referred to as a web page address or a download address) of the target application in response to the operation, and send a download request to the server 300. The download request is used to request to download an installation package of the target application from the server 300. In the process in which the electronic device 100 downloads the installation package of the target application, when detecting that a data length of downloaded data reaches a preset value, the electronic device 100 may determine a data digest of the target application based on the downloaded data. The data digest may include a part of the downloaded data and/or a hash value of the part of the downloaded data, where a data length of the part of downloaded data is equal to the preset value. The electronic device 100 may send the data digest of the target application to the server 200. In some embodiments, the electronic device 100 may alternatively send the URL of the target application to the server 200 in response to the operation of downloading the target application by the user. It should be noted that, in this case, the electronic device 100 may simultaneously send the URL of the target application and the data digest of the target application to the server 200, or may separately send the URL of the target application and the data digest of the target application to the server 200.

It may be understood that, in some other embodiments, before the electronic device 100 sends the data digest of the target application to the server 200, if the electronic device 100 receives a detection result sent by the server 200, and the detection result indicates that the target application is a risky application, the electronic device 100 may no longer send the data digest of the target application to the server 200.

The electronic device 100 may receive the detection result sent by the server 200, where the detection result indicates whether the target application is a risky application. The electronic device 100 may output a risk prompt when determining that the target application downloaded by the user has a security risk (that is, determining that the target application is a risky application). The risk prompt is used to notify the user that the target application is a risky application. Optionally, when determining that the target application downloaded by the user is a risky application, the electronic device 100 may alternatively intercept the target application (for example, reject to install the installation package of the target application, or delete the downloaded data from the installation package of the target application) in response to the detection result.

The server 200 (also referred to as an interception server) may store a risky application database, and the risky application database may include data digests of a plurality of risky applications and URLs of the plurality of risky applications. The server 200 may receive the URL of the target application and/or the data digest of the target application that are/is sent by the electronic device 100, and determine the detection result based on a comparison result between the risky application database and the URL of the target application and/or the data digest of the target application. The detection result indicates whether the target application is a risky application. After determining the detection result, the server 200 may send the detection result to the electronic device 100.

The server 300 (also referred to as a download server) may store the installation package of the target application. The server 300 may receive a request that is for obtaining the installation package of the target application and that is sent by the electronic device 100, and send the installation package of the target application to the electronic device 100 in response to the request.

In some embodiments, the electronic device 100 may alternatively store a local risk database, and the local risk database may include URLs of one or more risky applications and/or data digests of the one or more risky applications. In this case, the electronic device 100 may perform pre-determining on the target application based on the local risk database and the URL and/or the data digest of the target application, to determine whether the server 200 further needs to perform risk detection on the target application. When determining that the server 200 does not need to perform risk detection on the target application, the electronic device 100 may output a risk prompt, or may intercept the target application (for example, reject installation of the installation package of the target application, or delete the downloaded data in the installation package of the target application). When determining that the server 200 further needs to perform risk detection on the target application, the electronic device 100 may send the URL and/or the data digest of the target application to the server 200, and the server 200 determines a detection result.

It may be understood that the system architecture shown in FIG. 1 is merely an example. In the system 1000, the electronic device 100 may be the smartphone shown in FIG. 1, or the electronic device 100 may be another electronic device like a tablet computer or a desktop computer. This is not limited herein in this application. The server 200 or the server 300 may be an independent server or server node, for example, a rack server, a blade server, or a tower server. In some embodiments, the server 200 or the server 300 may alternatively be a server unit in a server, or the like. In addition, in some other embodiments, the browser application in the electronic device 100 may alternatively be replaced with another application. This is not limited herein in this application.

The following describes a risky application interception manner that is based on a uniform resource locator (uniform resource locator, URL) of a web page browsed by the user according to an embodiment of this application.

In a process in which the user accesses a target web page by using the electronic device 100, the electronic device 100 may send a URL of the target web page to the server 200, and the server 200 determines whether a type of the URL of the target web page is a URL type of a risky web page. If the server 200 determines that the type of the URL of the target web page is a URL type of a risky web page, the server 200 may determine that the target web page is a risky web page. After determining that the target web page is a risky web page, the server 200 may send a detection result to the electronic device 100. The detection result is used to notify the electronic device 100 that the target web page is a risky web page. The electronic device 100 may determine, based on the detection result, that the target web page is a risky web page, and determine that all downloadable applications provided by the target web page are risky applications. In this way, when detecting a download operation performed by the user on any application (namely, the target application) on the web page, the electronic device 100 may notify the user that the target application is a risky application.

In the foregoing manner, before the target application is downloaded, whether the target application is a risky application may be determined, and whether to intercept the target application may be determined. However, security of the target web page is not always consistent with security of an application on the target web page. When the target web page is a non-risky web page, the application on the target web page may still be a risky application. In this case, a missed interception event is likely to occur. When the target web page is a risky web page, the application on the target web page may still be a non-risky application. In this case, a false interception event is likely to occur. In addition, a URL of a web page may change frequently, and this may also cause a missed interception event to occur.

The following describes another risky application interception manner that is based on the download address of the target application according to an embodiment of this application.

The electronic device 100 may receive a tap operation performed by the user on the URL of the target application, and obtain the installation package of the target application from the server 300 in response to the tap operation. When downloading the installation package of the target application, the electronic device 100 may send the URL of the target application to the server 200. The server 200 stores URLs of a plurality of risky applications. The server 200 may compare the URL of the target application with the URLs of the plurality of risky applications, to determine a detection result. The detection result indicates whether the target application is a risky application. When determining that the URLs of the plurality of risky applications include the URL of the target application, the server 200 determines that the detection result indicates that the target application is a risky application. When determining that the URLs of the plurality of risky applications do not include the URL of the target application, the server 200 determines that the detection result indicates that the target application is not a risky application. The server 200 may send the detection result to the electronic device 100. The electronic device 100 may determine, based on the detection result, whether the target application is a risky application. When determining that the target application is a risky application, the electronic device 100 may reject to install the target application, and delete related data of the target application.

In the foregoing manner, the electronic device 100 may identify and intercept the risky application. However, because a URL corresponding to a risky application changes frequently, the foregoing manner is likely to cause missed interception, and damage the user's rights.

This application provides an interception method. The electronic device 100 may receive a download operation performed by the user on the target application, and in response to the download operation, obtain the URL of the target application, and start to download the installation package (package) of the target application from the server 300. In the download process, the electronic device 100 may determine the data digest (the data digest is also referred to as first data in this application) of the target application based on the downloaded data in the installation package, and send the data digest of the target application to the server 200. Optionally, the electronic device 100 may further send the URL of the target application to the server 200. The server 200 may determine the detection result based on the risky application database and the data digest of the target application, or determine the detection result based on the risky application database, the data digest of the target application, and the URL of the target application. The server 200 may return the detection result to the electronic device 100. The detection result indicates whether the target application has a security risk (that is, whether the target application is a risky application). After the electronic device 100 determines, based on the detection result, that the target application is a risky application, the electronic device 100 may output the risk prompt, or may intercept the target application (for example, reject installation of the installation package of the target application, or delete the downloaded data in the installation package of the target application). The risk prompt is used to notify the user that the target application is a risky application.

In this way, the electronic device 100 may determine, in the download process of the target application, whether the target application is a risky application, to reduce traffic and time consumption. In addition, because the data digest is determined based on the downloaded data in the installation package of the target application, and data in the application does not change frequently, a detection result based on the data digest is more accurate. Therefore, the foregoing method can further reduce a probability of missed interception and false interception.

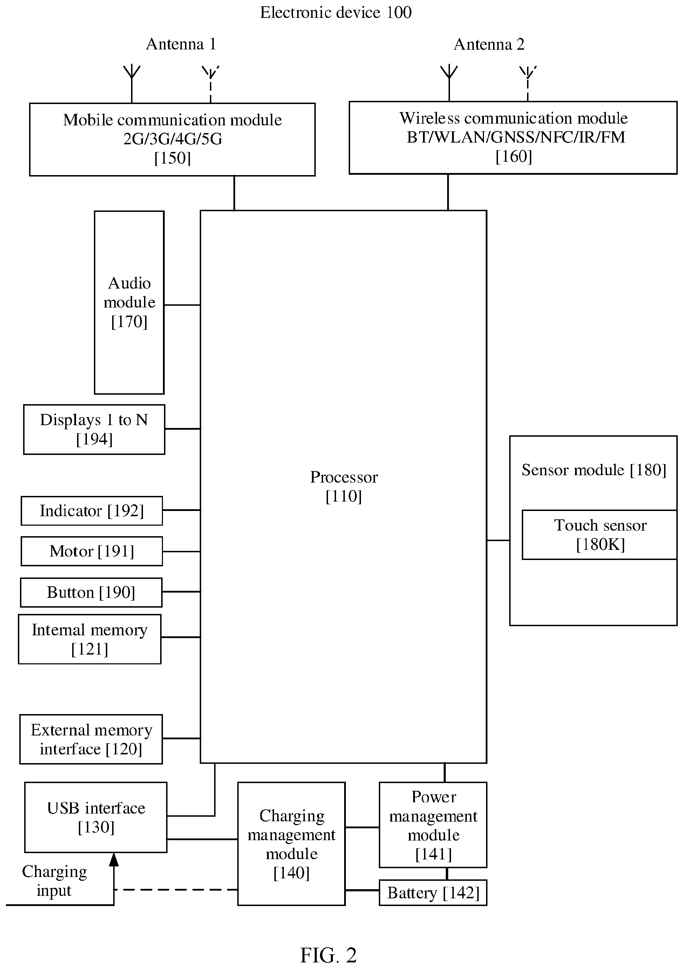

FIG. 2 is a diagram of a structure of the electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, and a sensor module 180, and optionally, may further include any one or more of the following: a button 190, a motor 191, an indicator 192, a display 194, and the like. The sensor module 180 may include a touch sensor 180K. In some embodiments, the sensor module 180 may further include another sensor (for example, a pressure sensor, a gyroscope sensor, a barometric pressure sensor, a magnetic sensor, an acceleration sensor, a distance sensor, an optical proximity sensor, a fingerprint sensor, or a temperature sensor).

It may be understood that the structure shown in this embodiment of the present invention does not constitute a specific limitation on the electronic device 100. In other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

A memory may further be disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to a speaker or a telephone receiver), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communications processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may further be manufactured by using an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. In embodiments of this application, the display 194 may be configured to output a risk prompt, or configured to output a risk-free prompt.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as DDR5 SDRAM), or the like. The non-volatile memory may include a magnetic disk storage device and a flash memory (flash memory).

The random access memory may be directly read and written by the processor 110, may be configured to store executable programs (such as machine instructions) of an operating system or another running program, and may also be configured to store data of users and applications.

The nonvolatile memory may also store executable programs, data of a user, data of an application, and the like, which may be loaded into the random access memory in advance for directly reading and writing by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The audio module 170 may include any one or more of the following: a speaker, a receiver, a microphone, a headset jack, and the like. The electronic device 100 may implement an audio function, for example, music playing and recording, by using the audio module 170, the application processor, and the like. The audio module 170 may be configured to convert digital audio information into an analog audio signal for output, and is also configured to convert analog audio input into a digital audio signal. The audio module 170 may further be configured to encode and decode an audio signal. In some embodiments, the audio module 170 may be disposed in the processor 110, or some functional modules of the audio module 170 are disposed in the processor 110.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In some other embodiments, the touch sensor 180K may also be disposed on a surface of the electronic device 100 at a location different from that of the display 194. In embodiments of this application, the touch sensor 180K may be configured to receive an operation of downloading a target application by a user.

The button 190 includes a power button, a volume button, and the like. The button 190 may be a mechanical button, or may be a touch-sensitive button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effect for touch operations performed on different areas of the display 194. Different application scenarios (for example, a time reminder, information receiving, an alarm clock, a game) may also correspond to different vibration feedback effects. A touch vibration feedback effect may further be customized.

The indicator 192 may be an indicator light, and may indicate a charging status and a power change, or may indicate a message, a missed call, a notification, and the like. In embodiments of this application, the motor 191 and the indicator 192 may also be configured to output the risk prompt.

It should be noted that, if the system 1000 further includes another electronic device, for hardware structures of the one or more electronic devices, refer to the hardware structure of the electronic device 100 shown in FIG. 2. Details are not described in this application.

The following describes hardware structures of the server 200 and the server 300 according to an embodiment of this application.

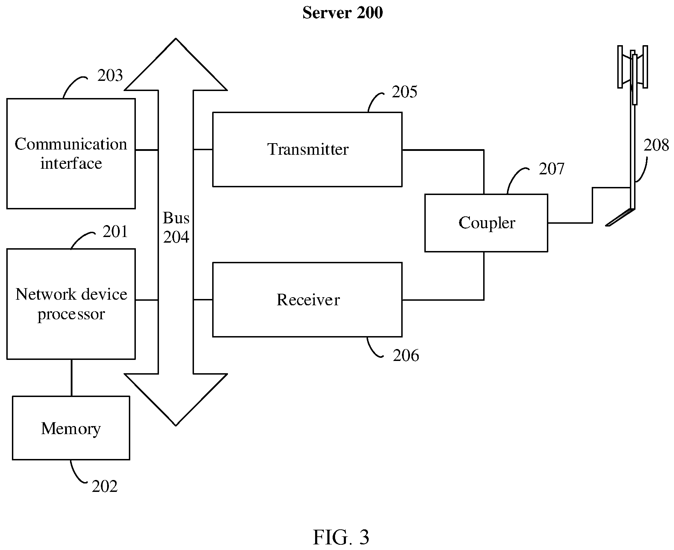

FIG. 3 is a diagram of a structure of the server 200 according to an embodiment of this application.

As shown in FIG. 3, the server 200 may include one or more network device processors 201, a memory 202, a communication interface 203, a transmitter 205, a receiver 206, a coupler 207, and an antenna 208. These components may be connected through a bus 204 or in another manner. In FIG. 3, for example, the components are connected through the bus.

The communication interface 203 may be used by the server 200 to communicate with another communication device, for example, an electronic device used by a consumer of a project. Specifically, the communication interface 203 may be a 3G communication interface, a long term evolution (LTE) (4G) communication interface, a 5G communication interface, a WLAN communication interface, a WAN communication interface, or the like. In addition to a wireless communication interface, the server 200 may further configure a wired communication interface 203 to support wired communication.

In some embodiments of this application, the transmitter 205 and the receiver 206 may be considered as a wireless modem. The transmitter 205 may be configured to perform transmission processing on a signal output by the network device processor 201. The receiver 206 is configured to receive a signal. In the server 200, there may be one or more transmitters 205 and receivers 206. The antenna 208 may be configured to convert electromagnetic energy in a transmission line into an electromagnetic wave in free space, or convert an electromagnetic wave in the free space into electromagnetic energy in the transmission line. The coupler 207 may be configured to split the mobile communication signal into a plurality of signals, and distribute the plurality of signals to a plurality of receivers 206. It may be understood that the antenna 208 of the network device may be implemented as a large-scale antenna array.

The memory 202 is coupled to the network device processor 201, and is configured to store various software programs and/or a plurality of groups of instructions. Specifically, the memory 202 may include a high-speed random access memory, or a non-volatile memory, for example, one or more disk storage devices, a flash memory device, or another non-volatile solid-state storage device.

The memory 202 may store an operating system (briefly referred to as a system below), for example, an embedded operating system like uCOS, VxWorks, or RTLinux. The memory 202 may further store a network communication program, and the network communication program may be used to perform communication with another communication device.

In embodiments of this application, the memory 202 may store a program for implementing the interception method according to an embodiment of this application, and the like.

In embodiments of this application, the network device processor 201 may be configured to read and execute computer-readable instructions. Specifically, the network device processor 201 may be configured to: invoke a program stored in the memory 202, for example, an implementation program of the interception method provided in one or more embodiments of this application, and execute instructions included in the program.

It should be noted that the server 200 shown in FIG. 3 is merely an implementation in embodiments of this application. During actual application, the server 200 may alternatively include more or fewer components. This is not limited herein.

It should be noted that, for the hardware structure of the server 300, refer to the hardware structure of the server 200 shown in FIG. 3. Details are not described herein again in this application.

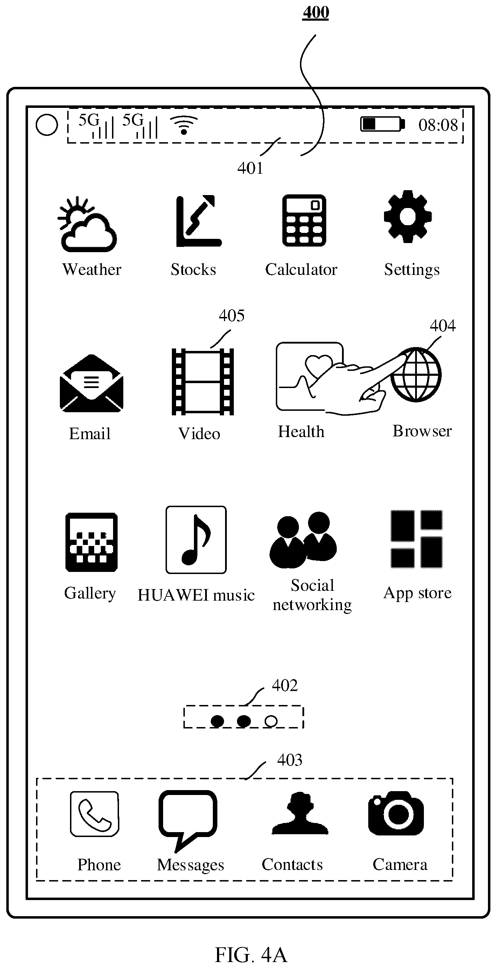

The following describes an interception method according to an embodiment of this application with reference to FIG. 4A to FIG. 4E.

The electronic device 100 may receive an input of downloading a target application by a user, start to download an installation package of the target application in response to the input, and determine, in the download process based on downloaded data in the installation package, whether the target application is a risky application. When the electronic device 100 determines that the target application is a risky application, the electronic device 100 may output a risk prompt, to notify the user that the target application is a risky application. Optionally, when the electronic device 100 determines that the target application is not a risky application, the electronic device 100 may output a risk-free prompt, to notify the user that the target application is not a risky application. Optionally, in the download process, the electronic device 100 may further output a download progress prompt, where the download progress prompt is used to notify the user of a download progress of the installation package of the target application.

For example, as shown in FIG. 4A, the electronic device 100 may display a home screen 400, a page on which an application icon is placed is displayed on the home screen 400, and the page includes a plurality of application icons (for example, a weather application icon, a browser application icon 404, a video application icon 405, an email application icon, a music application icon, and a gallery application icon). Optionally, a page indicator 402 is further displayed on a lower part of the page on which the application icons are placed, to indicate a total quantity of pages on the home screen and a location relationship between the currently displayed page and another page. For example, the home screen 400 may include three pages. A white dot in the page indicator is located at a third location from left, indicating that the currently displayed page is a third page from left in the three pages. Optionally, a status bar 401 is further displayed on an upper part of the page on which the application icons are placed. The status bar 401 may include information such as a strength indicator of a communication signal, a battery level value, and time. Further optionally, there may be a dock (dock) area 403 below the page indicator. The dock area 403 may include one or more dock icons (for example, a phone application icon, a messaging application icon, a contacts application icon, and a camera application icon). The one or more dock icons in the dock area can remain displayed during page switching.

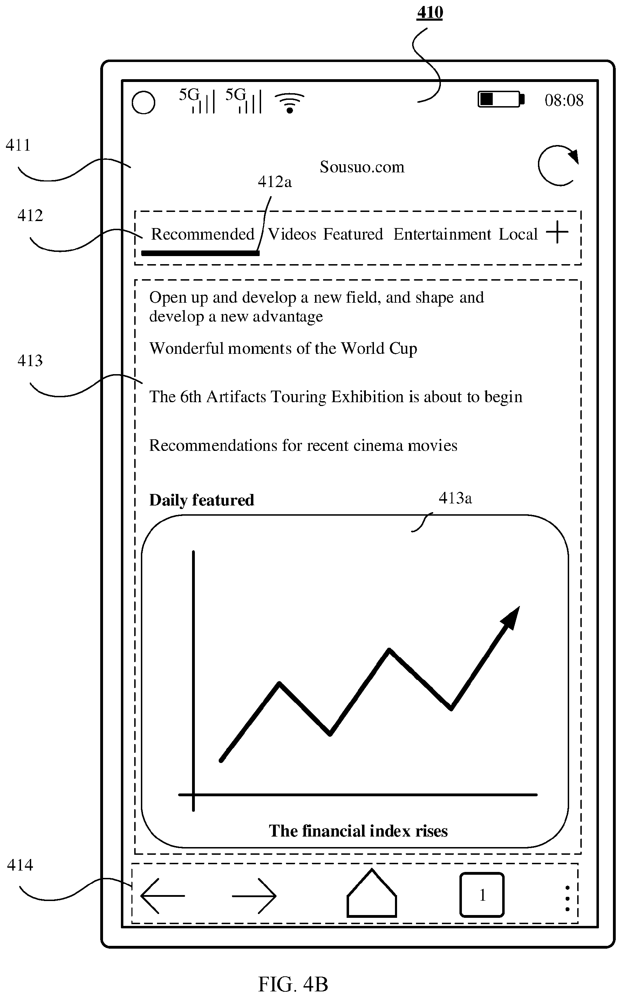

The electronic device 100 may receive a tap operation performed by the user on the browser application icon 404, and display, in response to the tap operation, a browser application interface 410 shown in FIG. 4B.

As shown in FIG. 4B, the browser application interface 410 may include a search box 411, an option bar 412, a web page content display area 413, and a bottom control bar 414. The search box 411 may be used to trigger the electronic device 100 to access, in response to a web page address entered by the user, a web page corresponding to the web page address, and display an interface of the web page. The search box 411 may also be used to trigger the electronic device 100 to search for and display, in response to an object entered by the user, content related to the object. The option bar 412 may include one or more options, for example, a recommended option, a videos option, a featured option, an entertainment option, and a local option. The option may be used to trigger the electronic device 100 to display, in the web page content display area 413, content corresponding to the option. The option bar 412 may further include an indicator 412a, to indicate an option corresponding to content currently displayed in the web page content display area 413. One or more web page hyperlinks may be displayed in the web page content display area 413, and the one or more web page hyperlinks may include a web page hyperlink in a form of a text title, for example, "Open up and develop a new field, and shape and develop a new advantage" or "Wonderful moments of the World Cup", or may include a web page hyperlink in a form of a picture, for example, a picture 413a. The web page hyperlink may be used to trigger the electronic device 100 to jump to a web page corresponding to the web page hyperlink, and display the web page interface. The bottom control bar 414 may include one or more controls, for example, a back control, a resume control, a home page control, a web page switching control, and a more control. The user may implement functions such as switching and backing to a web page by using the one or more controls in the bottom control bar 414.

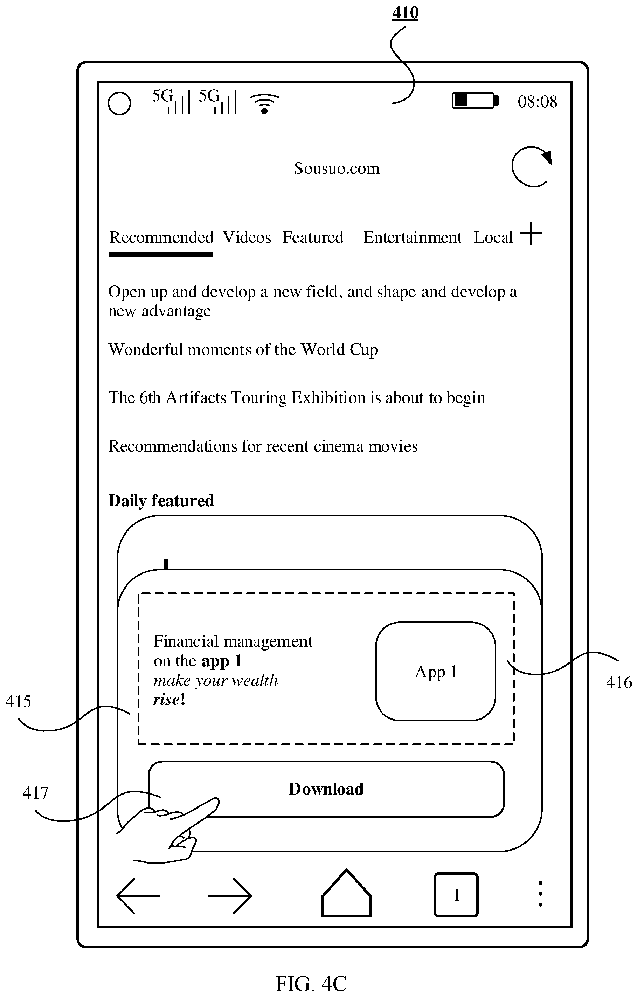

In the process in which the user browses the browser application interface 410, the electronic device 100 may receive a notification of a browser application or another application. As shown in FIG. 4C, in response to the notification, the electronic device 100 may display an advertisement pop-up window 415 on the browser application interface 410, where the advertisement pop-up window 415 is used to ask the user whether to go to a web page address for downloading an app 1 (namely, the target application).

As shown in FIG. 4C, the electronic device 100 displays the advertisement pop-up window 415 on the browser application interface 410. The advertisement pop-up window 415 may include advertisement content 416 of the app 1 and a jump control 417. An output form of the advertisement content 416 of the app 1 may include any one or more of the following: a text, a picture (for example, a static picture or a dynamic picture), a voice, a video, and the like. For example, as shown in FIG. 4C, the advertisement content 416 may include a text "Financial management on the app 1, make your wealth rise!", and may further include an application icon of the app 1. The jump control 417 may be used to trigger the electronic device 100 to access a download web page of the app 1, and display a target application download interface 420.

It may be understood that, in another embodiment of this application, the electronic device 100 may alternatively display an advertisement pop-up window in a process of using another application (for example, a game application or a video application). This is not limited herein in this application.

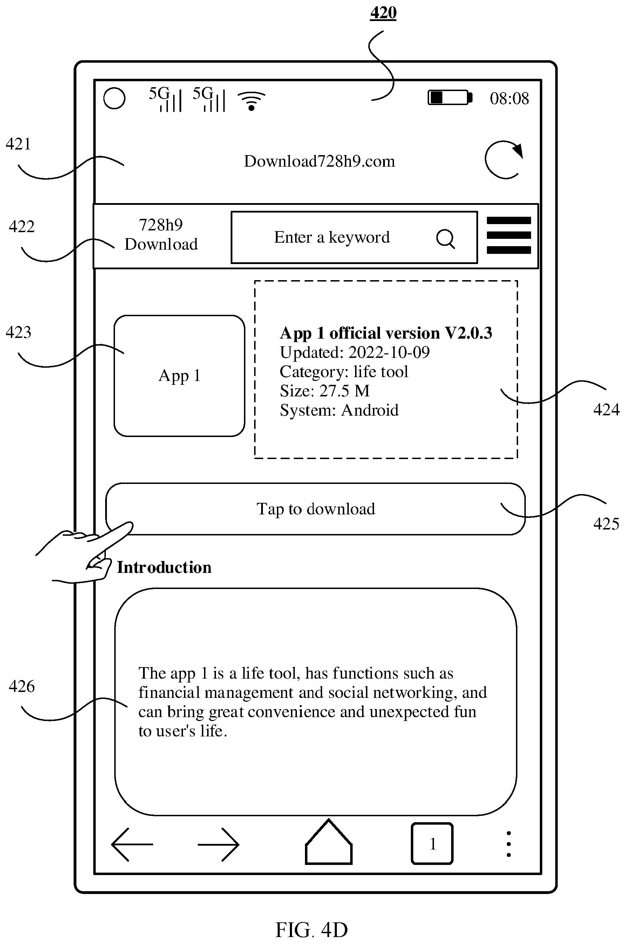

The electronic device 100 may receive a tap operation performed by the user on the jump control 417, and display, in response to the tap operation, the target application download interface 420 shown in FIG. 4D.

As shown in FIG. 4D, the target application download interface 420 may include a website address bar 421 and a download control 425. Optionally, the target application download interface 420 may further include any one or more of the following: a web page title bar 422, a target application icon 423, basic application information 424, and an application introduction 426.

The website address bar 421 may indicate a web page address corresponding to a web page interface (namely, the target application download interface) currently displayed by the electronic device 100. For example, when the target application download interface is an interface of 728h9 Download shown in FIG. 4D, the web page address displayed in the website address bar 421 may be Download728h9.com. The web page title bar 422 may include a title of a web page (for example, 728h9 Download), and optionally, may further include a search bar, used to perform site searching on the web page. The basic application information 424 is basic information of the target application (namely, the app 1), and may include any one or more of the following: a version of the installation package of the target application, update time of the installation package of the target application, a category of the target application, a size of the installation package, an applicable system of the target application, and the like that are provided on the web page. It can be learned from the basic application information 424 shown in FIG. 4D that, on 728h9 Download, the version of the installation package of the app 1 is an official version V2.0.3, the update time is October 9, 2022, the category of the app 1 is a life tool, the size of the installation package is 27.5 M, and the applicable system is Android. The download control 425 is a download control of the target application, and may trigger the electronic device 100 to download the installation package of the app 1 provided by the current web page. The application introduction 426 is a function brief introduction for the app 1. The application introduction 426 may include a text brief introduction, for example, "The app 1 is a life tool, has functions such as financial management and social networking, and can bring great convenience and unexpected fun to user's life". In some embodiments, the application introduction 426 may alternatively be in one or more introduction forms such as a text, a picture, an audio, and a video. This is not limited herein in this application.

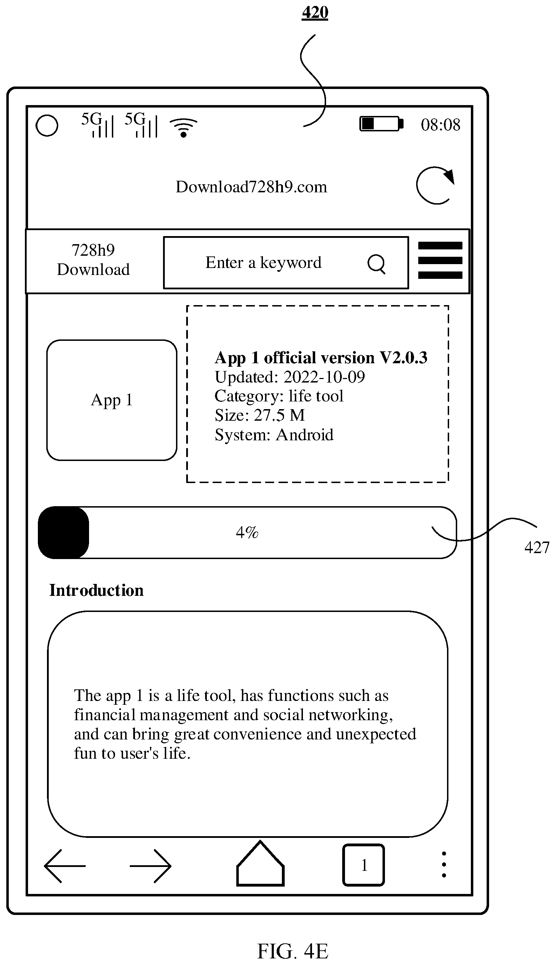

The electronic device 100 may receive a tap operation performed by the user on the download control 425, and download the installation package of the target application in response to the tap operation. Optionally, in the download process, the electronic device 100 may further display a download progress prompt 427 of the installation package shown in FIG. 4E on the target application download interface 420.

As shown in FIG. 4E, the download progress prompt 427 may be a bar-shaped progress bar. In the bar-shaped progress bar, a real-time sending progress may be displayed by using a proportion of a gray (or another color) part in the entire bar-shaped progress bar. Optionally, a number indicating a sending progress, for example, "4%", may further be displayed in the bar-shaped progress bar. It may be understood that, in some embodiments, the download progress prompt 427 may alternatively be a ring progress bar, a progress bar in another form, or the like. The download progress prompt 427 may be displayed on the download control 425 on the target application download interface 420 and cover the download control 425, or may be displayed at another location on the target application download interface 420. This is not limited in this application.

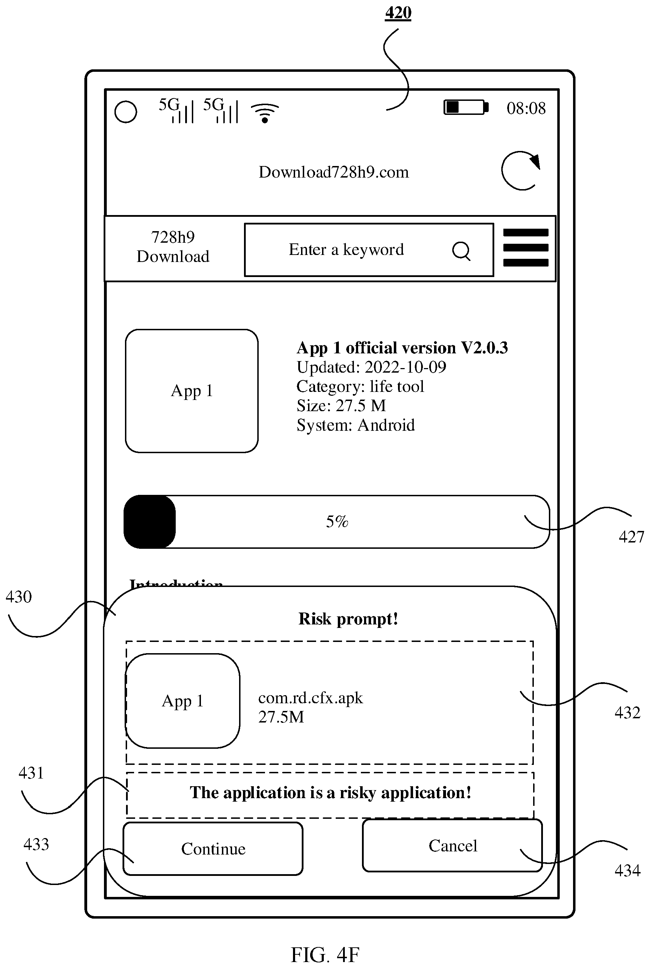

The electronic device 100 may determine, in response to the tap operation performed by the user on the download control 425, whether the target application is a risky application. In the process in which the electronic device 100 downloads the installation package of the target application, if the electronic device 100 determines that the target application is a risky application, as shown in FIG. 4F, even if the installation package of the target application is not completely downloaded, the electronic device 100 may also display a risk prompt window 430, to notify the user that the target application is a risky application and there is a download risk.

As shown in FIG. 4F, in the download process of the installation package of the target application, the electronic device 100 may output the risk prompt window 430 on the target application download interface 420, where the risk prompt window 430 may include prompt information 43 1, brief information 432 of the target application, a continue control 433, and a cancel control 434. The prompt information 431 may include a text prompt, for example, "The application is a risky application!". The brief information 432 of the target application may include any one or more of the following: the application icon of the target application, a name of the installation package of the target application, the size of the installation package of the target application, and the like. The brief information 432 of the target application may be used to notify the user which application is risky. This helps the user quickly identify a risky application when the user downloads a plurality of applications at the same time. The continue control 433 may be used to trigger the electronic device 100 to continue to download the installation package of the target application. The cancel control 434 may be used to trigger the electronic device 100 to stop downloading the installation package of the target application, and delete downloaded data of the installation package.

In some embodiments, a countdown may further be displayed on the cancel control 434. If the electronic device 100 does not receive any operation performed by the user on the electronic device 100 before the countdown ends, in response to the end of the countdown, the electronic device 100 may stop downloading the installation package of the target application, and delete the downloaded data of the installation package.

In some other embodiments, the cancel control 434 may alternatively be replaced with a delete control, used to trigger the electronic device 100 to delete the downloaded data of the installation package of the target application. This is not limited herein in this application.

It may be understood that the embodiment shown in FIG. 4F is merely an example for describing a case in which the risk prompt may be the risk prompt window 430. In some embodiments, the electronic device 100 may alternatively output the risk prompt in one or more manners such as a picture, a text, a voice, and vibration, to give a prompt to the user.

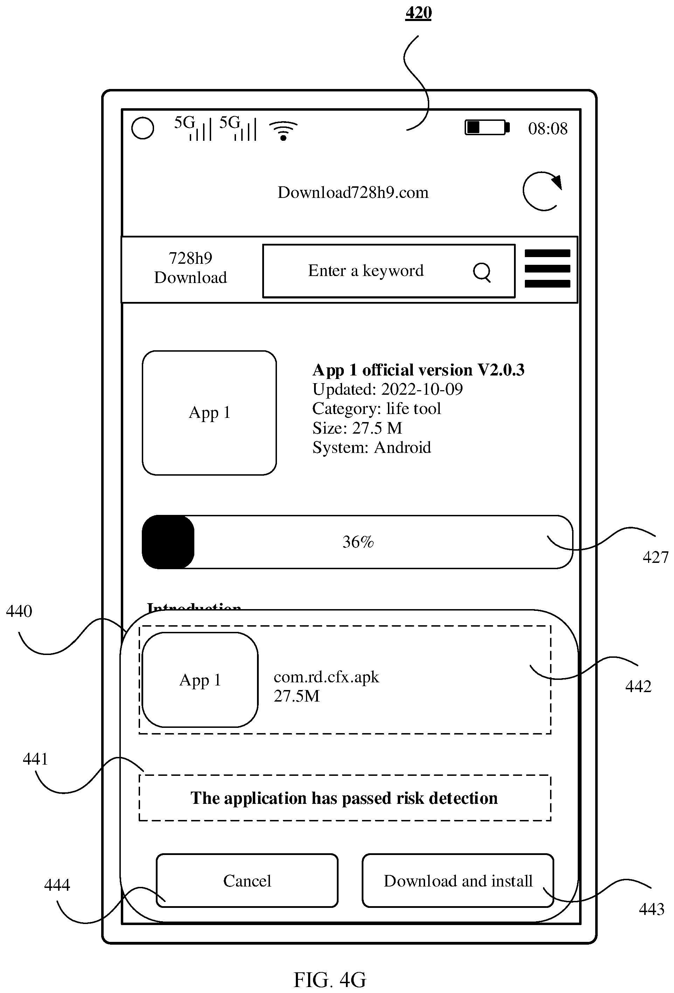

In the process in which the electronic device 100 downloads the installation package of the target application, if the electronic device 100 determines that the target application is not a risky application, optionally, as shown in FIG. 4G, even if the installation package of the target application is not completely downloaded, the electronic device 100 may also output a risk-free prompt window 440, to notify the user that the target application is not a risky application and there is no download risk.

As shown in FIG. 4G, in the download process of the installation package of the target application, the electronic device 100 may output the risk-free prompt window 440 on the target application download interface 420, where the risk-free prompt window 440 may include prompt information 441, brief information 442 of the target application, and a download and install control 443, and optionally, may further include a cancel control 444. The prompt information 441 may include a text prompt, for example, "The application has passed risk detection" or "The application is not a risky application". The brief information 442 of the target application may include any one or more of the following: the application icon of the target application, a name of the installation package of the target application, the size of the installation package of the target application, and the like. The brief information 442 of the target application may be used to notify the user of an application to which the risk-free prompt relates. This helps the user quickly identify a risk-free application when the user downloads a plurality of applications at the same time. The download and install control 443 may be used to trigger the electronic device 100 to install the target application after the installation package of the target application is downloaded. The cancel control 444 may be used to trigger the electronic device 100 to stop downloading the installation package of the target application, and delete downloaded data of the installation package. In this way, when the user does not want to download the target application, the user may alternatively cancel downloading the target application by performing an operation on the cancel control 444.

In some embodiments, a countdown may further be displayed on the download and install control 443. If the electronic device 100 does not receive any operation performed by the user on the electronic device 100 before the countdown ends, in response to the end of the countdown, the electronic device 100 may install the target application after detecting that the installation package of the target application is downloaded.

It may be understood that the risk-free prompt window 440 shown in FIG. 4G is merely an example. In some embodiments, the electronic device 100 may alternatively output the risk-free prompt in one or more manners such as a picture, a text, a voice, and vibration, to give a prompt to the user.

It should be noted that the embodiments shown in FIG. 4A to FIG. 4G are merely examples. In this embodiment of this application, the browser application may alternatively be replaced with another application. This is not limited herein in this application.

According to the interception method shown in FIG. 4A to FIG. 4G, the electronic device 100 may determine, in the download process of the target application, whether the target application is a risky application, and determine whether to intercept the target application. In this way, whether to perform an interception operation can be determined as soon as possible. This reduces time and traffic consumption, and improves efficiency.

In this embodiment of this application, a manner of triggering the electronic device 100 to download the target application may alternatively be a manner different from that in the embodiment shown in FIG. 4C (that is, entering the target application download interface through the advertisement pop-up window).

In some application scenarios, the electronic device 100 may alternatively display a download website address of the target application on a search result page in response to a search operation performed by the user in the browser application. The user may tap the download website address of the target application on the search page. In response to the operation of tapping the download website address of the target application by the user, the electronic device 100 may download the target application, or the electronic device 100 may display the target application download interface.

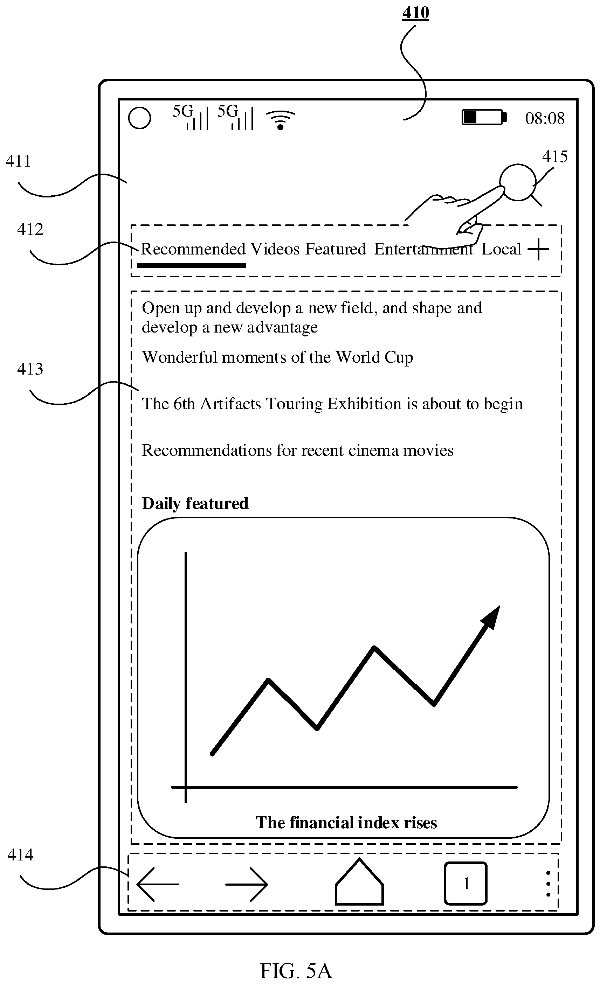

For example, as shown in FIG. 5A, the electronic device 100 displays the browser application interface 410. For detailed descriptions of the browser application interface 410, refer to related content in the embodiment shown in FIG. 4B. The electronic device 100 may receive an input of the user for the search box 411, and display entered content in the search box 411 in response to the input. For example, when the input of the user is "Financial management", as shown in FIG. 5A, a text "Financial management" may be displayed in the search box 411. The electronic device 100 may further display a search control 415 in the search box 411 (or near the search box 411) in response to the input of the user for the search box 411. The search control 415 is used to trigger the electronic device 100 to perform searching based on the input of the user, and display a search result page.

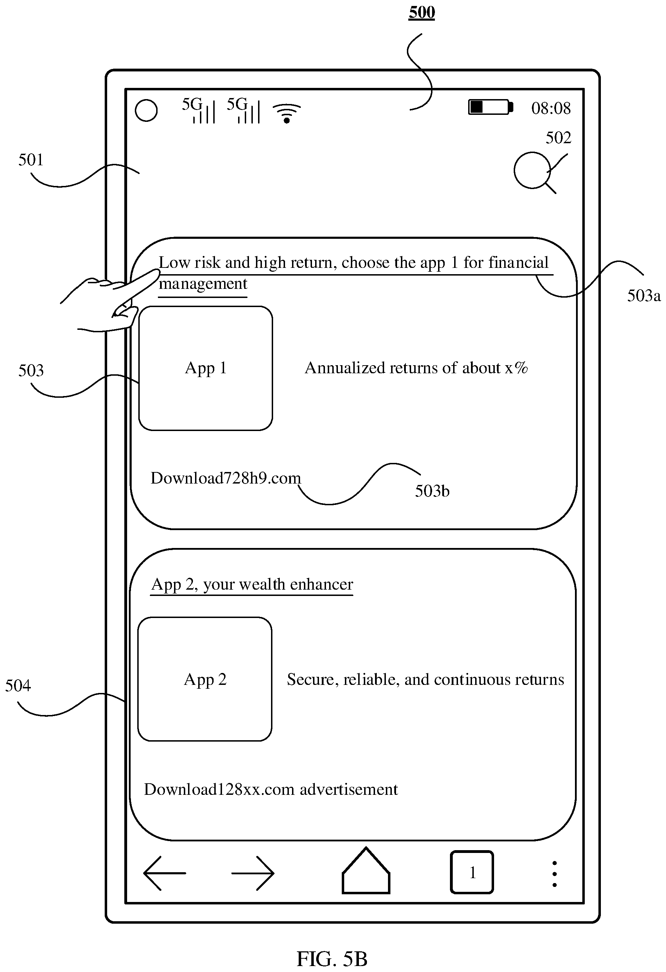

The electronic device 100 may receive a tap operation performed by the user on the search control 415, and in response to the tap operation, perform searching based on "Financial management" entered by the user, and display a search result page 500 shown in FIG. 5B.

As shown in FIG. 5B, the search result page 500 may include a search box 501, a search control 502, and one or more search results, for example, a search result 503 and a search result 504. For functions of the search box 501 and the search control 502, refer to functions of corresponding controls on the browser application interface 410. Each of the one or more search results may include a title and an introduction. The search result may also be used as a network hyperlink, and is used to trigger the electronic device 100 to jump to a web page interface corresponding to the search result. The introduction may include a text brief introduction and a picture. In some embodiments, the search result may further include a web page address, and the like. The search result 503 is used as an example. The search result 503 may include a title 503a. The title 503a may be "Low risk and high return, choose the app 1 for financial management". The search result 503 is also a web page hyperlink, and is used to trigger the electronic device 100 to display a web page interface corresponding to the search result 503. The search result 503 may further include a brief introduction, and the brief introduction may be "Annualized returns of about x%". The brief introduction may further include an application icon of the app 1. The search result 503 may further include a web page address 503b, and the web page address 503b indicates a web page address corresponding to the search result 503.

The electronic device 100 may receive an input of the user for the search result 503, and in response to the input, display a web page interface corresponding to the search result 503, that is, display the target application download interface 420 shown in FIG. 4D. For an operation performed by the user on the target application download interface 420, a response of the electronic device 100, and determining and a response of the electronic device 100 on whether the target application is a risky application, refer to related content in the embodiment shown in FIG. 4D to FIG. 4G. Details are not described herein again in this application.

It may be understood that the embodiment shown in FIG. 5A and FIG. 5B is merely an example for describing a case in which the download address of the target application may be obtained in a search manner to download the target application. Specific content entered by the user and the search result are not limited in embodiments of this application.

In some application scenarios, in response to an input of the user for an advertisement slot of the target application on an application interface (for example, a game application interface or a video application interface), the electronic device 100 may alternatively display the target application download interface, and download the target application.

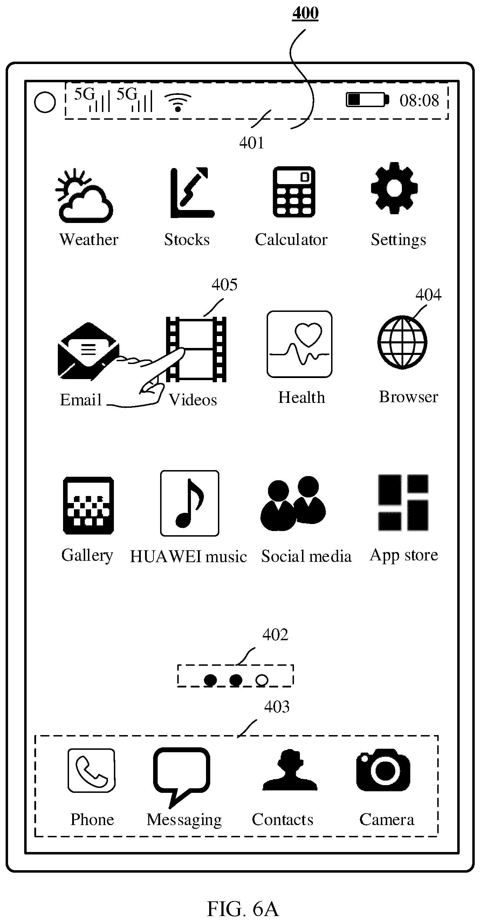

For example, as shown in FIG. 6A, the electronic device 100 displays the home screen 400. For related descriptions of the home screen 400, refer to the specific descriptions in the embodiment shown in FIG. 4A. Details are not described herein again.

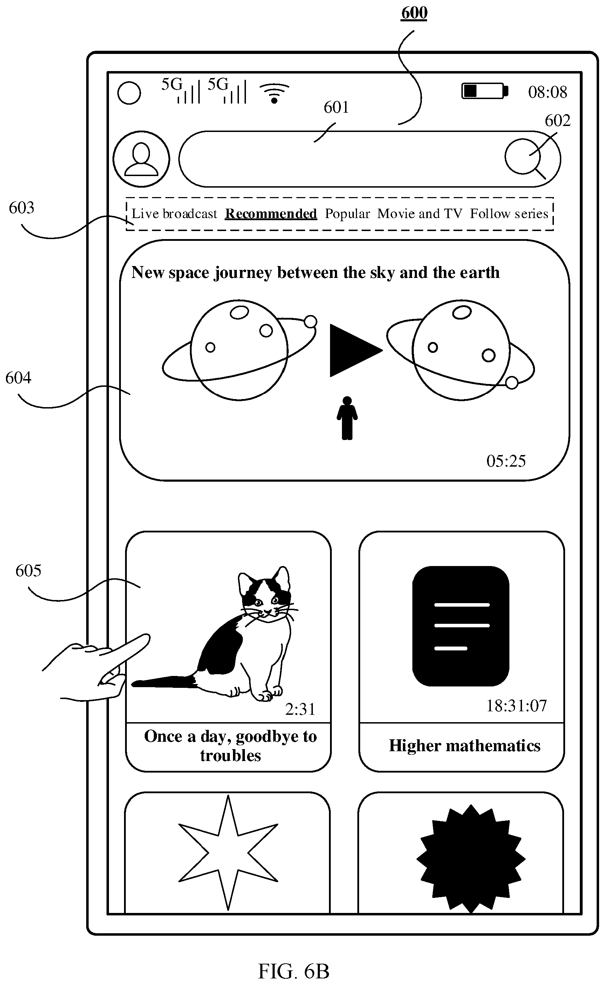

The electronic device 100 may receive an input of the user for the video application icon 405 on the home screen 400, and display, in response to the input, a video application interface 600 shown in FIG. 6B.

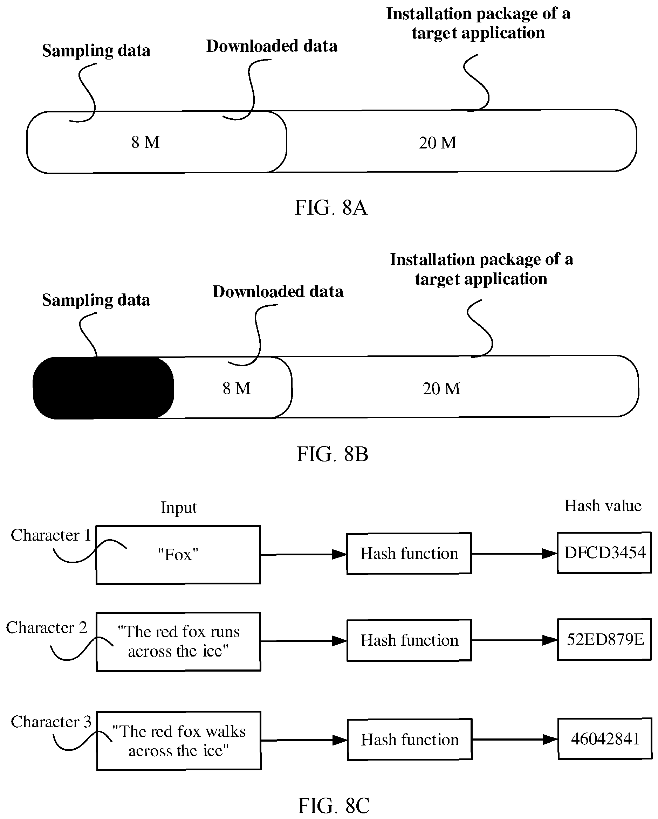

As shown in FIG. 6B, the video application interface 600 may include a search box 601, a search control 602, an option bar 603, and one or more videos, for example, a video 604 and a video 605. For specific functions of the search box 601 and the search control 602, refer to related descriptions of the similar controls in the foregoing embodiments. The option bar 603 may include a plurality of different options, for example, a live broadcast option, a recommended option, a popular option, a movie and TV option, and a follow series option. Each of the plurality of options is used to trigger the electronic device 100 to display one or more videos corresponding to the option. For example, one or more videos corresponding to the recommended option are displayed on a video application interface shown in FIG. 8B. Each of the one or more videos may include a cover image, a video title, video duration, and the like. The video may be used to trigger the electronic device 100 to display a playing interface of the video.

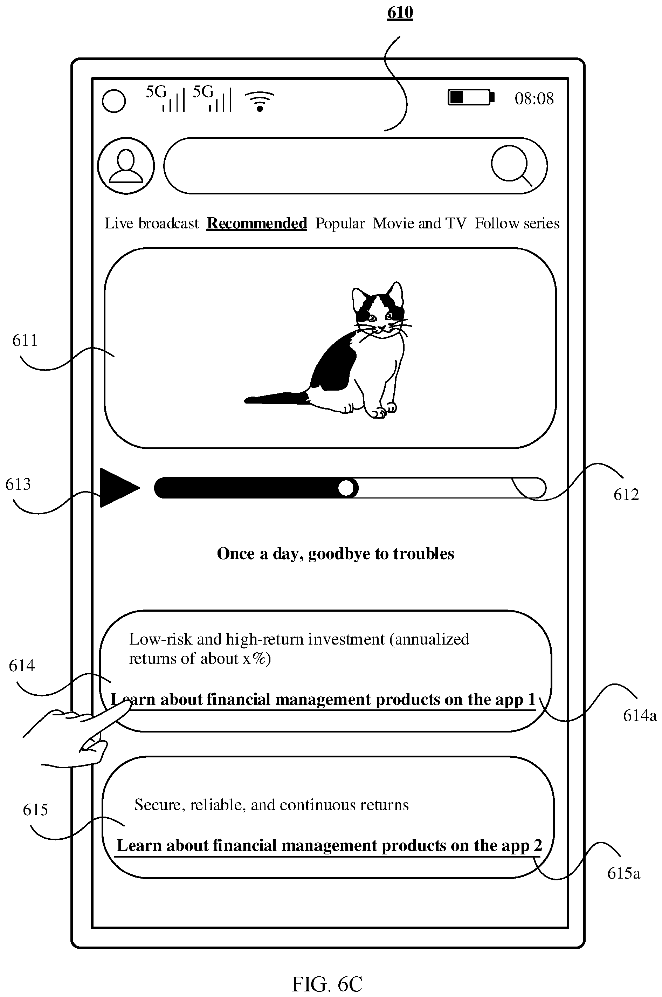

For example, the electronic device 100 may receive an input of the user for the video 605, and display, in response to the input, a video playing interface 610 shown in FIG. 6C.

As shown in FIG. 6C, the video playing interface 610 may include a video playing window 611, a progress bar 612, a playing control 613, and one or more advertisements, for example, an advertisement 614 and an advertisement 615. The video playing window 611 may be used to play a video file corresponding to the video 605, the progress bar 612 may be used to display a playing progress of the video, and the playing control 613 may be used to play or pause the video. The advertisement 614 may include advertisement content and a jump control 614a. The advertisement content may include a text, for example, "Low-risk and high-return investment (annualized returns of about x%)." In some embodiments, the advertisement content may alternatively include content in a form of a voice, a picture, a video, or the like. The jump control 614a may be used to trigger the electronic device 100 to jump to a download interface of an app corresponding to the advertisement (namely, a download interface of the app 1). In some embodiments, the jump control 614a may alternatively be configured to trigger the electronic device 100 to jump to an advertisement details interface, or the like. Similarly, the advertisement 615 may also include advertisement content and a jump control 615a. The advertisement content may include a text, for example, "Secure, reliable, and continuous returns". The jump control 615a may be configured to trigger the electronic device 100 to jump to a download interface of an app 2.

The electronic device 100 may receive an input of the user for the jump control 614a, and display, in response to the input, the target application download interface 420 shown in FIG. 4D. For an operation performed by the user on the target application download interface 420, a response of the electronic device 100, and determining and a response of the electronic device 100 on whether the target application is a risky application, refer to related content in the embodiment shown in FIG. 4D to FIG. 4G. Details are not described herein again in this application.

It may be understood that the embodiment shown in FIG. 6A to FIG. 6C is merely an example for describing a case in which the target application download interface may be jumped to through the advertisement in the application to download the target application. In embodiments of this application, the video application may alternatively be replaced with another application (for example, a game application or an entertainment application). This is not limited herein in this application.

The following describes a specific procedure of an interception method according to an embodiment of this application.

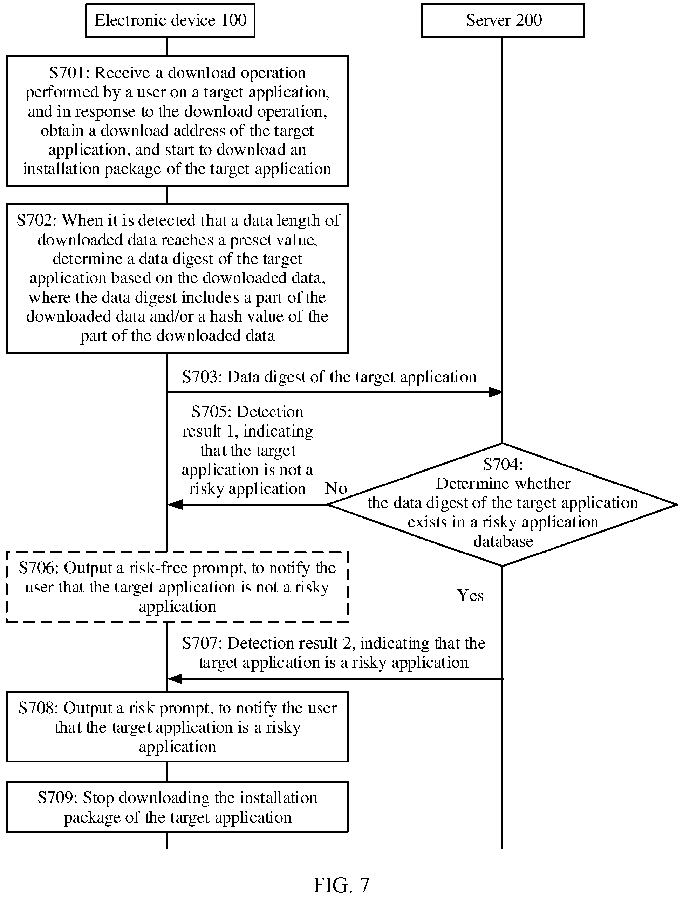

As shown in FIG. 7, for example, a user downloads a target application based on the electronic device 100 in the electronic device 100 is used. The specific procedure of the interception method according to this embodiment of this application may include the following steps.

S701: The electronic device 100 receives a download operation performed by the user on the target application, and in response to the download operation, obtains a download address of the target application, and starts to download an installation package of the target application.

The electronic device 100 may receive the download operation performed by the user on the target application, and obtain the download address of the target application in response to the download operation.

The download operation performed by the user on the target application may include a tap operation performed on a download control of the target application, for example, the tap operation performed on the download control 425 in the embodiment shown in FIG. 4D. In some embodiments, the download operation performed by the user on the target application may further include access to a web page address (URL) of the target application, for example, the operation of entering and accessing the web page address of the target application in the search box 411 in the embodiment shown in FIG. 4B. In some other embodiments, the download operation performed by the user on the target application may further include an input operation performed by the user on an advertisement of the target application, an operation of shaking the electronic device 100 leftward or rightward by the user based on a prompt of the advertisement, or the like, when the electronic device 100 displays the advertisement. A specific form of the download operation is not limited in this application.

For example, a specific procedure in which the electronic device 100 receives the download operation performed by the user on the target application, and starts to download the installation package of the target application in response to the download operation may include the following steps.
1. The electronic device 100 receives the download operation performed by the user on the target application, and sends a download request to the server 300 in response to the download operation, where the download request is used to request the server 300 to send the installation package of the target application to the electronic device 100.
2. The server 300 receives the download request sent by the electronic device 100, and sends the installation package of the target application to the electronic device 100 in response to the download request.
3. The electronic device 100 receives the installation package that is of the target application and that is sent by the server 300.

It should be noted that, because it takes specific time to send and receive the installation package of the target application, it also takes specific time for the electronic device 100 to download the installation package of the target application.

S702: When detecting that a data length of downloaded data reaches a preset value, the electronic device 100 may determine a data digest of the target application based on the downloaded data, where the data digest includes a part of the downloaded data and/or a hash value of the part of downloaded data.

The downloaded data is data that is in the installation package of the target application and that is downloaded by the electronic device 100.

When detecting that the data length of the downloaded data reaches the preset value, the electronic device 100 may determine the data digest (in embodiments of this application, a data digest of a first target application is also referred to as first data of the first target application, and a data digest of a second target application is also referred to as second data of the second target application) from the downloaded data.

In some embodiments, the data digest may be sampling data, the sampling data may be a previous part of the downloaded data, and a data length of the sampling data is equal to the preset value. The preset value may be a preset data length, for example, 8 M or 4 K. The preset value may be set by the electronic device 100 (for example, when the installation package of the target application is downloaded through a browser application, the preset value may be set by the browser application). In some other embodiments, the preset value may alternatively be set by the electronic device 100 in response to an operation of setting the preset value by the user.

For example, FIG. 8A shows a relationship among the installation package of a target application, the downloaded data, and the sampling data.

As shown in FIG. 8A, the installation package of the target application may include 20 M data. When the electronic device 100 has downloaded the first 8 M data of the installation package of the target application, the 8 M data is downloaded data. When the preset value is 8 M, the downloaded data is the same as the sampling data.

It may be understood that the embodiment shown in FIG. 8A is merely an example for describing the relationship among the target application installation package, the downloaded data, and the sampling data. In embodiments of this application, the installation package may include more or less data than the installation package shown in FIG. 8A, and the downloaded data may also include more or less data than the downloaded data shown in FIG. 8A. This is not limited herein in this application.

For example, FIG. 8B shows another relationship among the sampling data, the downloaded data, and the installation package of a target application.

As shown in FIG. 8B, the installation package of the target application may include 20 M data. When the electronic device 100 has downloaded the first 8 M data of the installation package of the target application, the 8 M data is downloaded data. When the preset value is 4 M, the first 4 M data in the downloaded data may be referred to as sampling data.

It may be understood that the embodiment shown in FIG. 8B is merely an example for describing the relationship among the sampling data, the downloaded data, and the installation package of the target application. In embodiments of this application, the installation package, the downloaded data, or the sampling data may include more or less data than that in the embodiment shown in FIG. 8B. This is not limited herein in this application.

In some other embodiments, the data digest may alternatively be a fingerprint of the sampling data. The fingerprint of the sampling data may be obtained through a hash operation, and the fingerprint of the sampling data may also be referred to as a hash value of the sampling data.

The hash operation is a method of creating a small digital "fingerprint" from any type of data. A hash function compresses a message or data into a digest to reduce a data amount and fix a data format. The hash operation may be implemented based on the hash function. The hash function may disorder and mix data, and recreate a fingerprint called a hash value (hash value, hash code, hash sum, or hash). In a hash operation process, data is irreversible. To be specific, original information on an interface cannot be reversed based on a fingerprint of the data.

The following describes an example of the hash operation process with reference to FIG. 8C.

As shown in FIG. 8C, the hash operation may be performed on input data based on the hash function, and a hash value of the data is output. In FIG. 8C, when the input data is a character 1, namely, "Fox", the output hash value is DFCD3454. When the input data is a character 2, namely, "The red fox runs across the ice", the output hash value is 52ED879E. When the input data is a character 3, namely, "The red fox walks across the ice", the output hash value is 46042841.

It can be learned that, when hash functions are the same, even if a difference between two pieces of input original data is small (for example, only one byte is different), two pieces of output hash values may also differ greatly. Therefore, whether the data is the same can be quickly determined based on the hash values of the data.

In addition, because a data length of the fingerprint of the sampling data is far less than a data length of the sampling data, using the fingerprint of the sampling data as the data digest can also reduce time consumed for sending the data digest and comparing data digests in subsequent steps.

S703: The electronic device 100 sends the data digest of the target application to the server 200.

After determining the data digest of the target application, the electronic device 100 may send the data digest of the target application to the server 200.

S704: The server 200 determines whether the data digest of the target application exists in a risky application database, and determines a detection result.

The server 200 stores the risky application database, and the risky application database may include data digests of a plurality of risky applications. In some embodiments, the risky application database may further include download addresses of the plurality of risky applications.

For example, Table 1 shows content composition of the risky application database.

**Table 1 Risky application database**

| Sequence number of an application | Download address of the application | Data digest of the application | |
|---|---|---|---|
| | | Hash value of sampling data | Sampling data |
| App 1 | a.com/a.apk | A1 | B1 |
| App 2 | com/path/a.apk | A2 | B2 |
| | com/path/hg/a.apk | | |
| App 3 | a.com/path/ab/a.apk | A3 | B3 |
| App 4 | a.com/path/yu/a.apk | A4 | B4 |

As shown in Table 1, the risky application database may include the download addresses of the plurality of risky applications and the data digests of the plurality of risky applications, and the data digest of the risky application may include sampling data and/or a hash value of the sampling data. A data length of the sampling data is the same as a data length of the sampling data, and both are preset values. In addition, the sampling data is data of a previous part in an installation package of the application. Optionally, the risky application database may further include a sequence number of the application and the like. It can be learned from Table 1 that a URL of the app 1 is a.com/a.apk, sampling data is B1, and a hash value of the sampling data is A1. A URL of the app 2 includes a.com/path/a.apk and a.com/path/hg/a.apk, sampling data is B2, and a hash value of the sampling data is A2. A URL of the app 3 is a.com/path/ab/a.apk, sampling data is B3, and a hash value of the sampling data is A3. A URL of the app 4 is a.com/path/yu/a.apk, sampling data is B4, and a hash value of the sampling data is A4. In addition, the applications (the app 1, the app 2, the app 3, and the app 4) shown in Table 2 are all risky applications.

It may be understood that the embodiment shown in Table 1 is merely an example. In this embodiment of this application, the risky application database may further include data digests of more or fewer risky applications, or may include download addresses of more or fewer risky applications, and each risky application may correspond to one or more download addresses. This is not limited herein in this application.

In some embodiments, the server 200 may further store an application database, and the application database may include the risky application database and a non-risky application database. The application database includes data digests of one or more risky applications, and may further include data digests of one or more non-risk applications. In addition, the application database further includes risk labels, each data digest in the application database has a corresponding risk label, and the risk label indicates whether an application corresponding to the data digest is a risky application. In this case, the application database may also be divided into the risky application database and the non-risky application database based on the risk labels.

For another example, Table 2 shows content composition of the application database.

**Table 2 Application database**

| Sequence number of an application | Download address of the application | Data digest of the application | Risky application or not |
|---|---|---|---|
| App 1 | a.com/a.apk | A1 | Yes |
| App 2 | a.com/path/a.apk | A2 | Yes |
| App 3 | a.com/path/ab/a.apk | A3 | Yes |
| App 4 | a.com/path/yu/a.apk | A4 | Yes |
| App 5 | a.com/path/cb/a.apk | A5 | No |
| App 6 | a.com/path/xy/a.apk | A6 | No |

As shown in Table 2, the application database may include download addresses, data digests, and risk labels of a plurality of risky applications, and download addresses, data digests, and risk labels of one or more non-risk applications. The data digest of the application may be sampling data of the application, or may be a hash value of the sampling data of the application. A data length of the sampling data is the same as a data length of the sampling data, and both are preset values. In addition, the sampling data is data of a previous part in an installation package of the application. Optionally, the application database may further include an ID, a name, or the like of the application. It can be learned from Table 2 that a URL of the app 1 is a.com/a.apk, and the data digest is A1. A URL of the app 2 is a.com/path/a.apk, and the data digest is A2. A URL of the app 3 is a.com/path/ab/a.apk, and the data digest is A3. A URL of the app 4 is a.com/path/yu/a.apk, and the data digest is A4. A URL of the app 5 is a.com/path/cb/a.apk, and a data digest is A5. A URL of the app 6 is a.com/path/xy/a.apk, and a data digest is A6. In addition, the app 1, the app 2, the app 3, and the app 4 are all risky applications, and neither the app 5 nor the app 6 is not a risky application.

It may be understood that the embodiment shown in Table 2 is merely an example. In embodiments of this application, the application database may further include more or fewer data digests or download addresses. In addition, if the application is a non-risk application, the application database may not store the data digest or the download address of the application. This is not limited herein in this application.

It should be noted that the data digest of the application in the application database (or the risky application database) is also determined based on the first part of data (also referred to as sampling data) in an installation package of the application. The data length of the sampling data is the same as the data length of the sampling data, and both are preset values.

In addition, it should be noted that the risky application database stored in the server 200 may be preset. In some embodiments, an administrator of the server 200 may periodically update and maintain data in the risky application database. In some other embodiments, the server 200 may further obtain feedback information of the user of the electronic device 100 for different applications, and update the risky application database based on the feedback information of the user. For example, when related data of an application A is not stored in the risky application database, the server 200 may receive a risk report that is of the user for the application A and that is sent by the electronic device 100, determine the application A as a risky application, and add a URL and a data digest of the application A to the risky application database. It may be understood that this is merely an example for describing a case in which the server 200 may update the risky application database based on the feedback information of the user. In this embodiment of this application, to ensure data accuracy, the server 200 may alternatively determine, based on the feedback information of the user by using another algorithm, whether an application is a risky application. This is not limited in this application.

The server 200 may compare the data digest of the target application with the risky application database, to determine the detection result.

If the server 200 determines that the risky application database includes the data digest of the target application, the server 200 may determine that the detection result is a detection result 2, and the detection result 2 indicates that the target application is a risky application. In this case, the server performs step S707.

If the server 200 determines that the risky application database does not include the data digest of the target application, the server 200 may determine that the detection result is a detection result 1, and the detection result 1 indicates that the target application is not a risky application. In this case, the server 200 performs step S705.

It should be noted that, when the risky application database stored in the server 200 is the application database shown in Table 2, if the server 200 determines that the application database includes the data digest of the target application, the server 200 further needs to determine, based on a risk label corresponding to the data digest in the application database, whether the target application is a risky application.

If the server 200 determines that the risky application database includes the data digest of the target application, and the risk label corresponding to the data digest is "Yes", the server 200 may determine that the detection result is the detection result 2, and the detection result 2 indicates that the target application is a risky application. In this case, the server performs step S707.

If the server 200 determines that the risky application database includes the data digest of the target application, and the risk label corresponding to the data digest is "No", the server 200 may determine that the detection result is the detection result 1, and the detection result 1 indicates that the target application is not a risky application. In this case, the server 200 performs step S705.

If the server 200 determines that the risky application database does not include the data digest of the target application, the server 200 may determine that the detection result is the detection result 1, and the detection result 1 indicates that the target application is not a risky application. In this case, the server 200 performs step S705.

In some embodiments, if the data digest that is of the target data and that is sent by the electronic device 100 is sampling data, and the data digests of the plurality of applications stored in the risky application database of the server 200 include a hash value of the sampling data of the application, the server 200 may alternatively determine a hash value of the sampling data based on the sampling data, and determine the detection result based on comparison between the hash value of the sampling data and the risky application database.

S705: The server 200 sends the detection result 1 to the electronic device 100, where the detection result 1 indicates that the target application is not a risky application.

When it is determined that the target application is not a risky application, the server 200 may send the detection result 1 to the electronic device 100. The detection result 1 is used to notify the electronic device 100 that the target application is not a risky application.

S706: The electronic device 100 outputs a risk-free prompt, to notify the user that the target application is not a risky application.

Step S706 is an optional step.

When the installation package of the target application is not completely downloaded, the electronic device 100 may output the risk-free prompt in response to the detection result 1 sent by the server 200.

The electronic device 100 may output the risk-free prompt in any one or more of the following manners: a text, a picture (a static picture and a dynamic picture), a video, an audio, vibration, and the like. For example, the risk-free prompt output by the electronic device 100 may be the risk-free prompt window 440 in the embodiment shown in FIG. 4G.

S707: The server 200 sends the detection result 2 to the electronic device 100, where the detection result 2 indicates that the target application is a risky application.

When it is determined that the target application is a risky application, the server 200 may send the detection result 2 to the electronic device 100. The detection result 2 is used to notify the electronic device 100 that the target application is a risky application and there is a download risk and an installation risk.

S708: The electronic device 100 outputs a risk prompt, to notify the user that the target application is a risky application.

When the installation package of the target application is not completely downloaded, the electronic device 100 may output the risk prompt in response to the detection result 2 sent by the server 200.

The electronic device 100 may output the risk prompt in any one or more of the following manners: a text, a picture (a static picture and a dynamic picture), a video, an audio, vibration, and the like. For example, the risk-free prompt output by the electronic device 100 may be the risk prompt window 430 in the embodiment shown in FIG. 4F.

S709: The electronic device 100 stops downloading the installation package of the target application.

In some embodiments, the electronic device 100 may stop downloading the installation package of the target application in response to confirmation of the user or if the electronic device 100 does not receive a deletion operation (for example, the tap operation performed by the user on the cancel control 434 in the embodiment shown in FIG. 4F) within specific time period. In some embodiments, the downloaded data in the installation package is deleted.

In some embodiments, alternatively, after the electronic device 100 outputs the risk prompt and detects that the user does not continue a download operation (for example, the tap operation performed by the user on the continue control 433 in the embodiment shown in FIG. 4F) within preset time (for example, 5 seconds), the electronic device 100 stops downloading the installation package of the target application, and deletes the downloaded data in the installation package.

In some embodiments, the electronic device 100 may alternatively stop downloading the installation package of the target application and delete the downloaded data in the installation package in response to the detection result 2 sent by the server 200.

In some other embodiments, alternatively, in response to the detection result 2 sent by the server 200, the electronic device 100 may stop downloading the installation package of the target application, and delete the downloaded data in the installation package when receiving a deletion operation of the user or detecting that the user does not continue the download operation within preset time after the risk prompt is output.

According to the interception method shown in FIG. 7, the electronic device 100 may determine, in the download process of the target application, whether the target application is a risky application, and determine whether to intercept the target application. In this way, whether to perform an interception operation can be determined as soon as possible. This reduces time and traffic consumption, and improves efficiency. In addition, occurrence of an identifying event can be avoided or reduced.

In a possible implementation, when sending the data digest to the server 200, the electronic device 100 may further send a download address of the target application. In other words, in the embodiment shown in FIG. 7, step S703 and step S704 may be replaced with the following two steps.
1. The electronic device 100 sends the data digest and the download address of the target application to the server 200.
2. The server 200 determines whether the data digest of the target application or the download address of the target application exists in the risky application database, and determines the detection result.

After receiving the download address and the data digest that are of the target application and that are sent by the electronic device 100, the server 200 may separately compare the download address and the data digest with the download addresses and the data digests in the risky application database, determine whether the download address of the target application or the data digest of the target application exists in the risky application database, and determine the detection result. The detection result indicates whether the target application is a risky application.

If the server 200 determines that the download address of the target application and the data digest of the target application do not exist in the risky application database, the server 200 determines that the detection result is the detection result 1, and the detection result 1 indicates that the target application is not a risky application. In this case, the server 200 may perform step S705.

If the server 200 determines that a URL of the target application or the data digest of the target application exists in the risky application database, the server 200 determines that the detection result is a detection result 2, and the detection result 2 indicates that the target application is a risky application. In this case, the server 200 performs the following step S707.

In the foregoing manner, whether the target application is a risky application is determined based on the download address and the data digest of the target application. This can also reduce a probability of a missed identifying event, and improve detection efficiency.

In some other embodiments, the electronic device 100 may also store a local risk database, and perform pre-determining on the target application based on the local risk database. To be specific, after step S702, the electronic device 100 may perform step 1: The electronic device 100 determines whether the download address or the data digest of the target application exists in the local risk database.

The local risk database may include data digests of one or more risky applications and/or download addresses of the one or more risky applications.

For example, Table 3 shows content composition of the local risk database.

**Table 3 Local risk database**

| Sequence number of an application | Download address of the application | Data digest of the application |
|---|---|---|
| App 1 | a.com/a.apk | A1 |
| App 2 | a.com/path/a.apk | A2 |

As shown in Table 3, the local risk database may include download addresses of one or more risky applications and data digests of the one or more risky applications. Optionally, the local risk database may further include an ID of an application, and the like. It can be learned from Table 1 that the download address of the app 1 includes a.com/a.apk, and the data digest is A1. The download address of the app 2 includes a.com/path/a.apk, and representation information is A2. In addition, both the app 1 and the app 2 are risky applications.

It may be understood that the embodiment shown in Table 3 is merely an example. In this embodiment of this application, the risky application database may further include download addresses of more or fewer risky applications or data digests of more or fewer risky applications. In addition, in the local risk database, one risky application may alternatively have a plurality of download addresses. This is not limited herein in this application.

In some embodiments, the local risk database may alternatively include only download addresses of one or more risky applications, or include only data digests of one or more risky applications.

In addition, it should be noted that, if the local risk database includes a data digest of an application, the data digest of the application is determined based on the first part of data (also referred to as sampling data in this application) in an installation package of the application, and a data length of the sampling data is the same as a data length of the sampling data, and both are preset values.

The electronic device 100 may perform pre-determining on the target application based on the local risk database. For example, a specific pre-determining procedure may include the following steps.
1. After obtaining the download address of the target application, the electronic device 100 may compare the download address with a download address of each risky application in the local risk database, to determine whether the download address of the target application exists in the local risk database.
2. After determining the data digest of the target application, the electronic device 100 may compare the data digest with the data digests in the local risk database, to determine whether the data digest of the target application exists in the local risk database.
3. If it is determined that the download address of the target application and the data digest of the target application do not exist in the local risk database, the electronic device 100 determines that no risk is detected in the target application, and performs step S703, and the server 200 performs further detection.
4. If it is determined that the download address of the target application or the data digest of the target application exists in the local risk database, the electronic device 100 determines that the target application is a risky application, and performs step S708 to output the risk prompt.

It may be understood that the foregoing specific pre-determining procedure is merely an example. In this embodiment of this application, the pre-determining procedure may alternatively include fewer or more steps than those in the foregoing embodiment, or an execution sequence different from that in the foregoing embodiment is used. This is not limited herein in this application.

It should be noted that, in some embodiments, if the electronic device 100 determines, through pre-determining, that no risk is detected in the target application, and the server 200 determines that the target application is a risky application, after receiving the detection result 2 sent by the server 200, the electronic device 100 may add the data digest of the target application (or the data digest and the download address of the target application) to the local risk database.

Specifically, when the electronic device 100 stores the local risk database, the electronic device 100 may add the data digest and the download address of the target application to the local risk database in response to the detection result 2 sent by the server 200.

For example, the target application is the app 3 in Table 2, and the local risk database is the content shown in Table 3. After the electronic device 100 receives the detection result 2 sent by the server 200, the electronic device 100 may update the local risk database to a local risk database shown in Table 4.

**Table 4 Local risk database**

| Sequence number of an application | Download address of the application | Data digest of the application |
|---|---|---|
| App 1 | a.com/a.apk | A1 |
| App 2 | a.com/path/a.apk | A2 |
| App 3 | a.com/path/ab/a.apk | A3 |

As shown in Table 4, in comparison with the original local risk database (Table 3), the download address and the data digest of the app 3 are added to the updated local risk database (Table 4).

It may be understood that the foregoing embodiment is merely an example for describing a data change in the local risk database before and after adding of the data digest and the download address of the target application to the local risk database. In this embodiment of this application, the local risk database may include more or less content. This is not limited herein in this application.

An embodiment of this application further provides a specific procedure of another interception method.

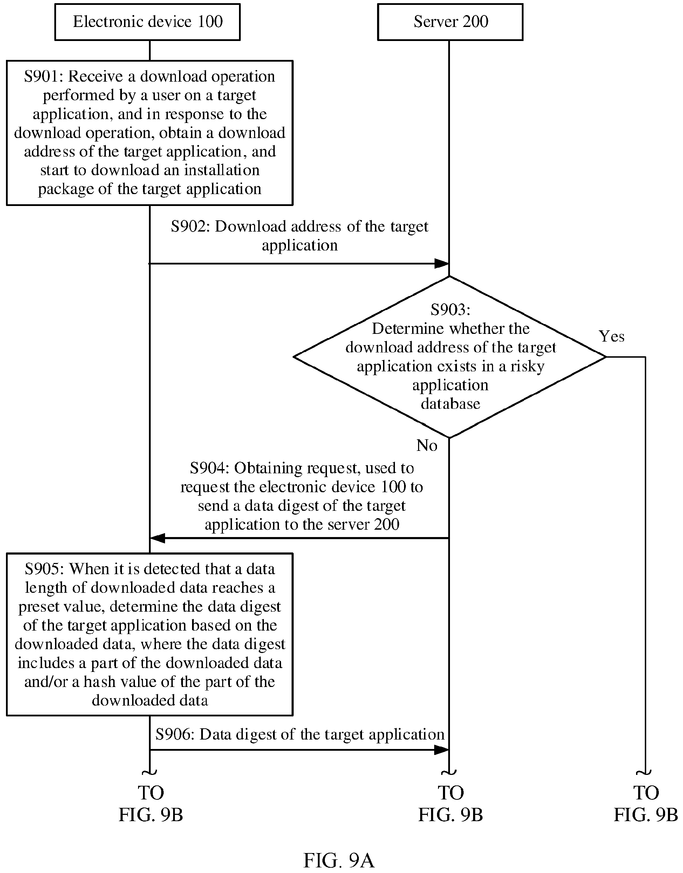

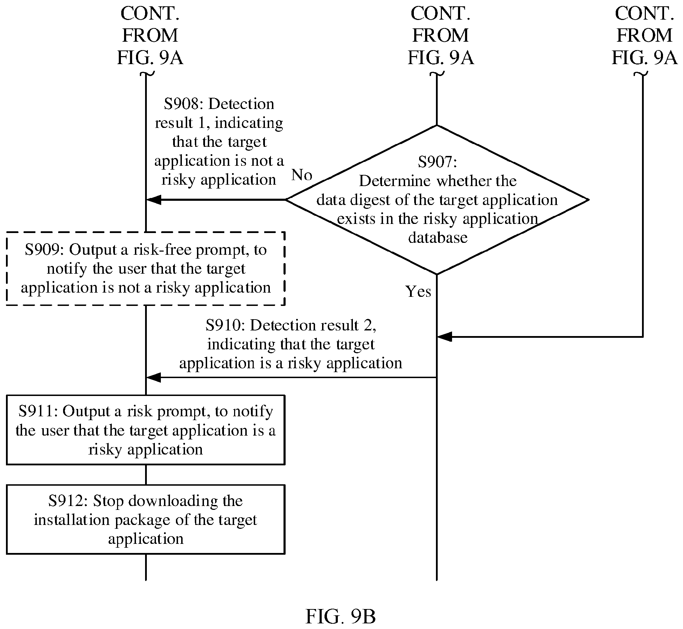

As shown in FIG. 9A and FIG. 9B, the specific procedure of the interception method may also include the following steps.

S901: The electronic device 100 receives a download operation performed by a user on a target application, and in response to the download operation, obtains a download address of the target application, and downloads an installation package of the target application.

For specific content of step S901, refer to the related descriptions in step S701 shown in FIG. 7.

S902: The electronic device 100 sends the download address of the target application to the server 200.

S903: The server 200 determines whether the download address of the target application exists in a risky application database.

The server 200 stores the risky application database, and data in the risky application database is far more than data in a local risk database. For specific content composition of the risky application database, refer to the related descriptions in step S705 in the embodiment shown in FIG. 7. Details are not described herein again.

If the server 200 determines that the risky application database includes the download address of the target application, the server 200 determines that the target application is a risky application, and performs step S910.

If the server 200 determines that the download address of the target application does not exist in the risky application database, the server 200 determines that the target application needs to further be detected, and performs step S904.

S904: The server 200 sends an obtaining request to the electronic device 100, to request the electronic device 100 to send a data digest of the target application to the server 200.

In some embodiments, the server 200 may alternatively replace the obtaining request with a detection result 1. To be specific, if the server 200 determines that the download address of the target application does not exist in the risky application database, the server 200 may alternatively send the detection result 1 to the electronic device 100. The detection result 1 indicates that the target application is a non-risky application, that is, the target application has no security risk.

S905: When detecting that a data length of downloaded data reaches a preset value, the electronic device 100 may determine the data digest of the target application based on the downloaded data, where the data digest includes a part of the downloaded data and/or a hash value of the part of downloaded data.

For specific content of step S905, refer to the related descriptions in step S702 in the embodiment shown in FIG. 7.

S906: The electronic device 100 sends the data digest of the target application to the server 200.

S907: The server 200 determines whether the data digest of the target application exists in the risky application database, and determines a detection result.

For specific content of the risky application database stored in the server 200, refer to the related descriptions in the embodiment shown in FIG. 7. Details are not described herein again.

If the server 200 determines that the data digest of the target application exists in the risky application database, the server 200 determines that the detection result is a detection result 2, and the detection result 2 indicates that the target application is a risky application. In this case, the server 200 performs step S910.

If the server 200 determines that the data digest of the target application does not exist in the risky application database, the server 200 determines that the detection result is the detection result 1, and the detection result 1 indicates that the target application is not a risky application. In this case, the server 200 performs step S908.

S908: The server 200 sends the detection result 1 to the electronic device 100, to notify the electronic device 100 that the target application is not a risky application.

S909: The electronic device 100 outputs a risk-free prompt, to notify the user that the target application is not a risky application.

S910: The server 200 sends the detection result 2 to the electronic device 100, to notify the user that the target application is a risky application.

S911: The electronic device 100 outputs a risk prompt, to notify the user that the target application is a risky application.

S912: The electronic device 100 stops downloading the installation package of the target application.

For step S908 and step S912, refer to the related steps in the embodiment shown in FIG. 7. Details are not described herein again.

It should be noted that, in the embodiment shown in FIG. 9A and FIG. 9B, if the electronic device 100 stores the local risk database, before the electronic device 100 sends the download address of the target application to the server 200, the electronic device 100 may first perform pre-determining based on the local risk database. For a specific execution manner, refer to the related descriptions in the foregoing embodiment. Details are not described herein again. In addition, if the local risk database does not include the download address or the data digest of the target application, and the server 200 determines that the target application is a risky application, after receiving the detection result 2 sent by the server 200, the electronic device 100 may add the data digest and/or the download address of the target application to the local risk database.

According to the interception method shown in FIG. 9A and FIG. 9B, whether the target application is a risky application may be first determined based on a URL of the target application. If it can be determined, based on the URL of the target application, that the target application is a risky application, the electronic device 100 may intercept the target application, and there is no need to determine, based on the data digest, whether the target application is a risky application. In this way, in some cases, an interception procedure can be simplified, interception efficiency can be improved, and a function loss can be reduced.

The following describes functional modules of a communication system according to an embodiment of this application.

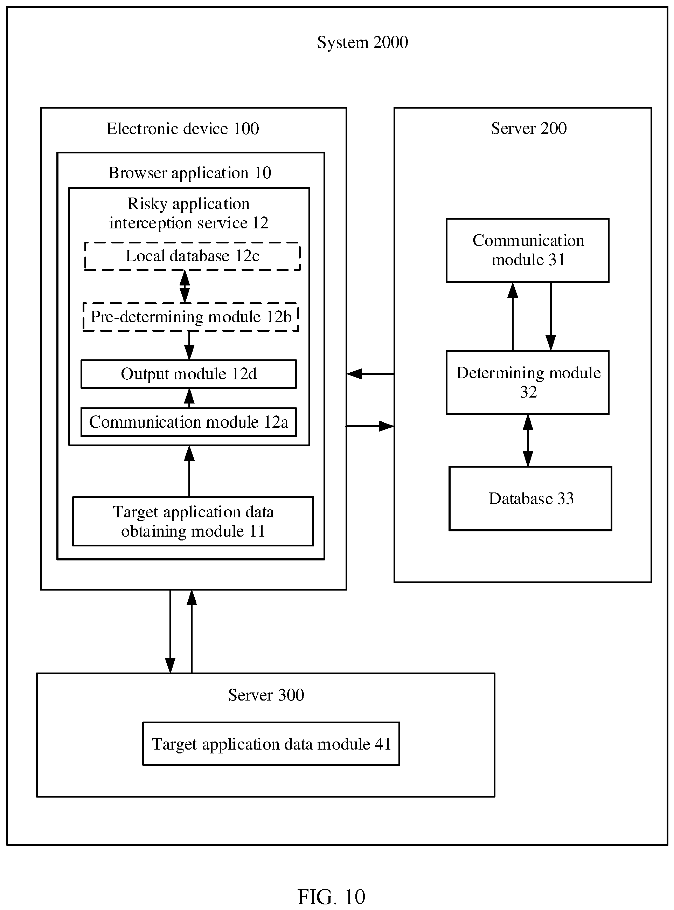

FIG. 10 is a diagram of functional modules of a system 2000 according to an embodiment of this application.

As shown in FIG. 10, the system 2000 may include the electronic device 100, the server 200, and the server 300. The electronic device 100 may include a browser application 10, and the browser application 10 may include a target application data obtaining module 11 and a risky application interception service 12. The risky application interception service 12 may include a communication module 12a and an output module 12d. Optionally, the risky application interception service 12 may further include a pre-determining module 12b and a local database 12c. The server 200 may include a communication module 31, a determining module 32, and a database 33. The server 300 may include a target application data module 41.

In the electronic device 100, the target application data obtaining module 11 may obtain a download address (URL) of a target application in response to an operation of downloading the target application by a user, send a download request to the target application data module 41 in the server 300, and start to receive an installation package that is of the target application and that is sent by the target application data module 41 (that is, start to download the installation package of the target application). In the download process, the target application data obtaining module 11 may determine a data digest of the target application based on a downloaded part of data in the installation package. The target application data obtaining module 11 may send the data digest of the target application to the risky application interception service 12. In some embodiments, after obtaining the URL of the target application, the target application data obtaining module 11 may alternatively send the URL of the target application to the risky application interception service 12. In some other embodiments, the target application data obtaining module 11 may alternatively first send the URL of the target application to the risky application interception service 12, and send the data digest of the target application to the risky application interception service 12 after receiving an obtaining request that is from the server 200 and that is forwarded by the risky application interception service 12.

After receiving the URL and/or the data digest of the target application that are/is sent by the target application data obtaining module 11, the risky application interception service 12 may forward, to the server 200 through the communication module 12a, the content sent by the target application data obtaining module 11. In some other embodiments, the risky application interception service 12 may alternatively determine, based on a pre-determining result of the pre-determining module 12b, whether to forward, to the server 200, the content sent by the target application data obtaining module 11.

The local database 12c and the pre-determining module 12b are optional modules. The local database 12c stores a local risk database, and the local risk database includes URLs of one or more risky applications and/or data digests of the one or more risky applications.

The pre-determining module 12b may compare the URL of the target application and/or the data digest of the target application with the local database 12c, to determine the pre-determining result. If the pre-determining result indicates that the target application is a risky application, the risky application interception service 12 may output a risk prompt through the output module 12d. Optionally, the risky application interception service 12 may alternatively intercept the target application, for example, delete the downloaded installation package of the target application, or reject to install the target application. If the pre-determining result indicates that the target application is not detected as a risky application, the risky application interception service 12 may send the URL of the target application and/or the data digest of the target application to the server 200 through the communication module 12a.

The risky application interception service 12 may further receive a detection result (for example, a detection result 1 or a detection result 2) sent by the server 200, and determine, based on the detection result, whether the target application is a risky application. If the risky application interception service 12 determines, based on the detection result, that the target application is a risky application, the risky application interception service 12 may output the risk prompt through the output module 12d. Optionally, the risky application interception service 12 may alternatively intercept the target application, for example, delete the downloaded installation package of the target application, or reject to install the target application. If it is determined, based on the detection result, that the target application is not a risky application, optionally, the risky application interception service 12 may output a risk-free prompt through the output module 12d.

In the server 200, the communication module 31 may receive the URL and/or the data digest of the target application that are/is sent by the communication module 12a in the risky application interception service 12. Then, the communication module 31 may send the received URL and/or data digest of the target application to the determining module 32. The communication module 31 may also receive a detection result that is of the target application and that is sent by the determining module 32, and send the detection result to the communication module 12a.

The determining module 32 may compare the URL of the target application and/or the data digest of the target application with a risky application database stored in the database 33, determine the detection result, and send the detection result to the communication module 31.

The database 33 stores the risky application database, and the risky application database includes URLs of one or more risky applications and data digests of the one or more risky applications.

In the server 300, the target application data module 41 stores the installation package of the target application. The target application data module 41 may receive the download request sent by the target application data obtaining module 11, and send the installation package of the target application to the target application data obtaining module 11 in response to the download request.

It may be understood that the functional modules shown in FIG. 10 are merely example for describing a case in which the browser application 10 may provide the risky application interception service 12 in a process in which the user downloads the target application through the browser application 10. The browser application 10 may interact with the server 200 through the risky application interception service 12, to implement risky application interception. In this embodiment of this application, the browser application 10 may alternatively be replaced with another application (for example, an input method application or a mall application). This is not limited herein in this application. In addition, in this embodiment of this application, the system 2000 may alternatively include more or fewer functional modules than those in the embodiment shown in FIG. 10, or include functional modules different from those in the embodiment shown in FIG. 10. This is not limited in this application either.

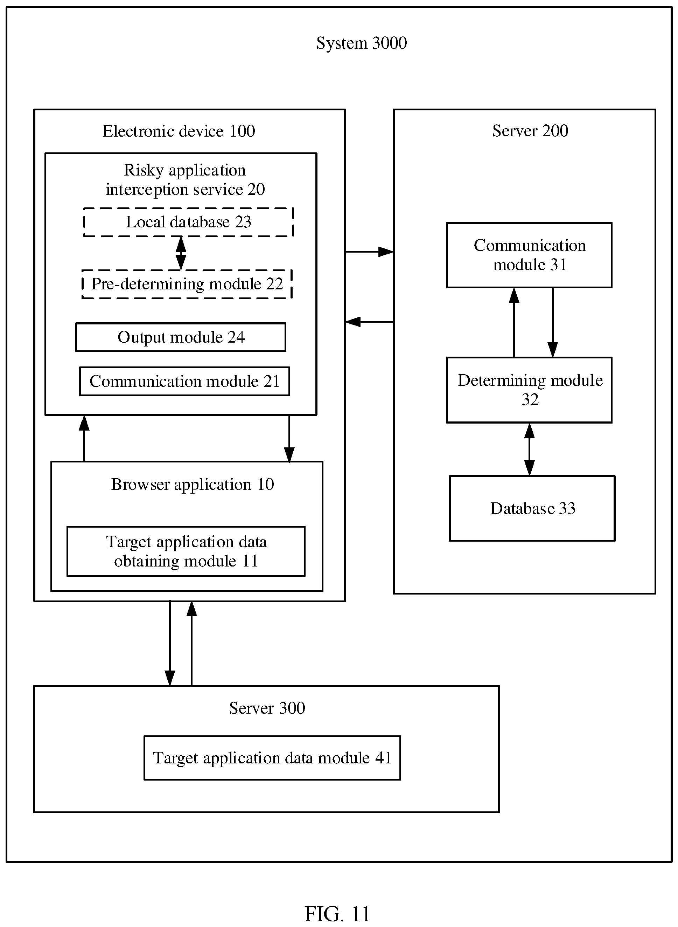

FIG. 11 is another diagram of functional modules of a system 3000 according to an embodiment of this application.

As shown in FIG. 11, the system 3000 may include the electronic device 100, the server 200, and the server 300. The electronic device 100 may include the browser application 10 and a risky application interception service 20. The browser application 10 includes the target application data obtaining module 11. The risky application interception service 20 may include a communication module 21 and an output module 24. Optionally, the risky application interception service 20 may further include a local database 23 and a pre-determining module 22. The server 200 may include the communication module 31, the determining module 32, and the database 33. The server 300 may include the target application data module 41.

For functions of the foregoing modules, refer to the related descriptions of the corresponding modules in the embodiment shown in FIG. 10. Details are not described herein again.

It may be understood that the functional modules shown in FIG. 11 are merely examples for describing a case in which, in a process in which the user downloads a target application through the browser application 10, the browser application 10 may interact with the server 200 through the risky application interception service 12 provided by the electronic device 100, to implement risky application interception. In this embodiment of this application, the browser application 10 may alternatively be replaced with another application (for example, an input method application or a mall application). This is not limited herein in this application. In addition, in this embodiment of this application, the system 2000 may alternatively include more or fewer functional modules than those in the embodiment shown in FIG. 11, or include functional modules different from those in the embodiment shown in FIG. 11. This is not limited in this application either.

For functional modules of the system 1000, refer to the functional modules of the system 2000 shown in FIG. 10, or refer to the functional modules of the system 3000 shown in FIG. 11.

The implementations of this application may be randomly combined to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. A computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

Persons of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

## Claims

1. An interception method, comprising:
Receiving (S701), by an electronic device (100), a first operation of downloading a first target application;
obtaining, by the electronic device (100), a first download address of the first target application in response to the first operation;
downloading, by the electronic device (100), a first installation package of the first target application from a first download server based on the first download address;
in the download process, obtaining, by the electronic device (100), first data of the first installation package ;
sending (S703), by the electronic device (100), the first data to a interception server;
receiving (S705/S707), by the electronic device (100), a first detection result sent by the interception server, wherein the first detection result is a result of detecting the first target application based on the first data; and
outputting, by the electronic device (100), a first notification message, wherein the first notification message is used to notify a user of risk information of the first target application,
wherein the electronic device (100) stores a local risk database, and if the first target application has a security risk, the electronic device adds the first data and/or the first download address to the local risk database.

2. The method according to claim 1, wherein the obtaining, by the electronic device, first data of the first installation package comprises:
when the electronic device detects that a data length of downloaded data in the first installation package reaches a preset length, determining, by the electronic device, the first data based on the downloaded data.

3. The method according to claim 2, wherein the first data is the downloaded data or a hash value of the downloaded data.

4. The method according to any one of claims 1 to 3, wherein the first detection result is a result of detecting the first target application by the interception server based on a risky application database and the first data.

5. The method according to claim 2 or 3, wherein the method further comprises:
Sending (S902), by the electronic device (100), the first download address to the interception server, wherein
the first detection result is a result of detecting the first target application based on the first data and the first download address.

6. The method according to claim 2 or 3, wherein before the obtaining, by the electronic device (100), first data of the first installation package, the method further comprises:
sending, by the electronic device (100), the first download address to the interception server; and
receiving, by the electronic device (100), a second detection result sent by the interception server, wherein the second detection result is a result of detecting the first target application based on the first download address, and the second detection result indicates that the first target application has no security risk.

7. The method according to any one of claims 2 to 6, wherein if the first target application has a security risk, the first notification message is used to notify the user that the first target application has a security risk; and the method further comprises:
stopping, by the electronic device (100), downloading the first installation package.

8. The method according to claim 7, wherein if the first target application has a security risk, the first notification message is used to notify the user that the first target application has a security risk; and the method further comprises:
deleting, by the electronic device (100), the downloaded data in response to a second operation performed on the first notification message; or
deleting, by the electronic device (100), the downloaded data if no operation performed by the user on the first notification message is received within preset duration.

9. The method according to any of claims 1 to 8, wherein if the first target application has no security risk, the first notification message indicates that the first target application has no security risk.

10. The method according to any of claims 1 to 9, the method further comprises:
receiving, by the electronic device (100), a third operation of downloading a second target application;
obtaining, by the electronic device (100), a second download address of the second target application in response to the third operation;
downloading, by the electronic device (100), a second installation package of the second target application from a second download server based on the second download address;
obtaining, by the electronic device (100), second data of the second installation package; and
outputting, by the electronic device (100), a second notification message when the electronic device determines, based on the second data, the second download address, and the local risk database, that the second target application has a security risk, wherein the second notification message is used to notify the user that the second target application has a security risk.

11. The method according to claim 10, wherein when the electronic device (100) determines, based on the second data, the second download address, and the local risk database, that the second target application has no security risk, the method further comprises:
sending, by the electronic device (100), the second data to the interception server;
receiving, by the electronic device (100), a fourth detection result sent by the interception server, wherein the fourth detection result is a result of detecting the second target application based on the second data; and
outputting, by the electronic device (100), a third notification message, wherein the third notification message is used to notify the user of risk information of the second target application.

12. An electronic device (100), comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 11.

13. A computer-readable storage medium, comprising computer instructions, wherein when the computer instructions are run on an electronic device, the electronic device is enabled to perform the method according to any one of claims 1 to 11.

## Patentansprüche

1. Abfangverfahren, umfassend:
Empfangen (S701), durch eine elektronische Vorrichtung (100), eines ersten Bedienvorgangs zum Herunterladen einer ersten Zielanwendung;
Erhalten, durch die elektronische Vorrichtung (100), einer ersten Downloadadresse der ersten Zielanwendung als Reaktion auf den ersten Bedienvorgang;
Herunterladen, durch die elektronische Vorrichtung (100), eines ersten Installationspakets der ersten Zielanwendung von einem ersten Downloadserver basierend auf der ersten Downloadadresse;
Erhalten, durch die elektronische Vorrichtung (100), erster Daten des ersten Installationspakets in dem Downloadprozess;
Senden (S703), durch die elektronische Vorrichtung (100), der ersten Daten an einen Abfangserver;
Empfangen (S705/S707), durch die elektronische Vorrichtung (100), eines ersten Erkennungsergebnisses, das durch den Abfangserver gesendet wird, wobei das erste Erkennungsergebnis ein Ergebnis des Erkennens der ersten Zielanwendung basierend auf den ersten Daten ist; und
Ausgeben, durch die elektronische Vorrichtung (100), einer ersten Benachrichtigungsnachricht, wobei die erste Benachrichtigungsnachricht verwendet wird, um einen Benutzer über Risikoinformationen der ersten Zielanwendung zu benachrichtigen,
wobei die elektronische Vorrichtung (100) eine lokale Risikodatenbank speichert und, falls die erste Zielanwendung ein Sicherheitsrisiko aufweist, die elektronische Vorrichtung die ersten Daten und/oder die erste Downloadadresse zu der lokalen Risikodatenbank hinzufügt.

2. Verfahren nach Anspruch 1, wobei das Erhalten, durch die elektronische Vorrichtung, erster Daten des ersten Installationspakets Folgendes umfasst:
Bestimmen, durch die elektronische Vorrichtung, der ersten Daten basierend auf den heruntergeladenen Daten, wenn die elektronische Vorrichtung erkennt, dass eine Datenlänge der in dem ersten Installationspaket heruntergeladenen Daten eine voreingestellte Länge erreicht.

3. Verfahren nach Anspruch 2, wobei die ersten Daten die heruntergeladenen Daten oder ein Hashwert der heruntergeladenen Daten sind.

4. Verfahren nach einem der Ansprüche 1 bis 3, wobei das erste Erkennungsergebnis ein Ergebnis des Erkennens der ersten Zielanwendung durch den Abfangserver basierend auf einer Datenbank für riskante Anwendungen und den ersten Daten ist.

5. Verfahren nach Anspruch 2 oder 3, wobei das Verfahren ferner Folgendes umfasst:
Senden (S902), durch die elektronische Vorrichtung (100), der ersten Downloadadresse an den Abfangserver, wobei das erste Erkennungsergebnis ein Ergebnis des Erkennens der ersten Zielanwendung basierend auf den ersten Daten und der ersten Downloadadresse ist.

6. Verfahren nach Anspruch 2 oder 3, wobei das Verfahren vor dem Erhalten, durch die elektronische Vorrichtung (100), erster Daten des ersten Installationspakets ferner Folgendes umfasst:
Senden, durch die elektronische Vorrichtung (100), der ersten Downloadadresse an den Abfangserver; und
Empfangen, durch die elektronische Vorrichtung (100), eines zweiten Erkennungsergebnisses, das durch den Abfangserver gesendet wird, wobei das zweite Erkennungsergebnis ein Ergebnis des Erkennens der ersten Zielanwendung basierend auf der ersten Downloadadresse ist und das zweite Erkennungsergebnis angibt, dass die erste Zielanwendung kein Sicherheitsrisiko aufweist.

7. Verfahren nach einem der Ansprüche 2 bis 6, wobei, wenn die erste Zielanwendung ein Sicherheitsrisiko aufweist, die erste Benachrichtigungsnachricht verwendet wird, um den Benutzer darüber zu benachrichtigen, dass die erste Zielanwendung ein Sicherheitsrisiko aufweist; und das Verfahren ferner Folgendes umfasst:
Beenden, durch die elektronische Vorrichtung (100), des Herunterladens des ersten Installationspakets.

8. Verfahren nach Anspruch 7, wobei, wenn die erste Zielanwendung ein Sicherheitsrisiko aufweist, die erste Benachrichtigungsnachricht verwendet wird, um den Benutzer zu benachrichtigen, dass die erste Zielanwendung ein Sicherheitsrisiko aufweist; und das Verfahren ferner Folgendes umfasst:
Löschen, durch die elektronische Vorrichtung (100), der heruntergeladenen Daten als Reaktion auf einen zweiten Bedienvorgang, der an der ersten Benachrichtigungsnachricht durchgeführt wird; oder
Löschen, durch die elektronische Vorrichtung (100), der heruntergeladenen Daten, falls innerhalb einer voreingestellten Dauer kein durch den Benutzer an der ersten Benachrichtigungsnachricht durchgeführter Bedienvorgang empfangen wird.

9. Verfahren nach einem der Ansprüche 1 bis 8, wobei, falls die erste Zielanwendung kein Sicherheitsrisiko aufweist, die erste Benachrichtigungsnachricht angibt, dass die erste Zielanwendung kein Sicherheitsrisiko aufweist.

10. Verfahren nach einem der Ansprüche 1 bis 9, wobei das Verfahren ferner Folgendes umfasst:
Empfangen, durch die elektronische Vorrichtung (100), eines dritten Bedienvorgangs zum Herunterladen einer zweiten Zielanwendung;
Erhalten, durch die elektronische Vorrichtung (100), einer zweiten Downloadadresse der zweiten Zielanwendung als Reaktion auf den dritten Bedienvorgang;
Herunterladen, durch die elektronische Vorrichtung (100), eines zweiten Installationspakets der zweiten Zielanwendung von einem zweiten Downloadserver basierend auf der zweiten Downloadadresse;
Erhalten, durch die elektronische Vorrichtung (100), zweiter Daten des zweiten Installationspakets; und
Ausgeben, durch die elektronische Vorrichtung (100), einer zweiten Benachrichtigungsnachricht, wenn die elektronische Vorrichtung basierend auf den zweiten Daten, der zweiten Downloadadresse und der lokalen Risikodatenbank feststellt, dass die zweite Zielanwendung ein Sicherheitsrisiko aufweist, wobei die zweite Benachrichtigungsnachricht verwendet wird, um den Benutzer zu benachrichtigen, dass die zweite Zielanwendung ein Sicherheitsrisiko aufweist.

11. Verfahren nach Anspruch 10, wobei, wenn die elektronische Vorrichtung (100) basierend auf den zweiten Daten, der zweiten Downloadadresse und der lokalen Risikodatenbank feststellt, dass die zweite Zielanwendung kein Sicherheitsrisiko aufweist, das Verfahren ferner Folgendes umfasst:
Senden, durch die elektronische Vorrichtung (100), der zweiten Daten an den Abfangserver;
Empfangen, durch die elektronische Vorrichtung (100), eines vierten Erkennungsergebnisses, das durch den Abfangserver gesendet wird, wobei das vierte Erkennungsergebnis ein Ergebnis des Erkennens der zweiten Zielanwendung basierend auf den zweiten Daten ist; und
Ausgeben, durch die elektronische Vorrichtung (100), einer dritten Benachrichtigungsnachricht, wobei die dritte Benachrichtigungsnachricht verwendet wird, um den Benutzer über Risikoinformationen der zweiten Zielanwendung zu benachrichtigen.

12. Elektronische Vorrichtung (100), die einen oder mehrere Prozessoren und einen oder mehrere Speicher umfasst, wobei der eine oder die mehreren Speicher mit dem einen oder den mehreren Prozessoren gekoppelt sind, der eine oder die mehreren Speicher dazu ausgelegt sind, Computerprogrammcode zu speichern, der Computerprogrammcode Computeranweisungen umfasst und wenn der eine oder die mehreren Prozessoren die Computeranweisungen ausführen, die elektronische Vorrichtung dazu befähigt ist, das Verfahren nach einem der Ansprüche 1 bis 11 durchzuführen.

13. Computerlesbares Speichermedium, das Computeranweisungen umfasst, wobei, wenn die Computeranweisungen auf einer elektronischen Vorrichtung ausgeführt werden, die elektronische Vorrichtung in die Lage versetzt wird, das Verfahren nach einem der Ansprüche 1 bis 11 durchzuführen.

## Revendications

1. Procédé d'interception, comprenant :
la réception (S701), par un dispositif électronique (100), d'une première opération de téléchargement d'une première application cible ;
l'obtention, par le dispositif électronique (100), d'une première adresse de téléchargement de la première application cible en réponse à la première opération ;
le téléchargement, par le dispositif électronique (100), d'un premier paquet d'installation de la première application cible depuis un premier serveur de téléchargement sur la base de la première adresse de téléchargement ;
au cours du processus de téléchargement, l'obtention, par le dispositif électronique (100), de premières données du premier paquet d'installation ;
l'envoi (S703), par le dispositif électronique (100), des premières données à un serveur d'interception ;
la réception (S705/S707), par le dispositif électronique (100), d'un premier résultat de détection envoyé par le serveur d'interception, le premier résultat de détection étant un résultat de la détection de la première application cible sur la base des premières données ; et
la délivrance, par le dispositif électronique (100), d'un premier message de notification, le premier message de notification étant utilisé pour porter à la connaissance d'un utilisateur des informations de risque de la première application cible,
dans lequel le dispositif électronique (100) stocke une base de données de risque locale, et si la première application cible présente un risque de sécurité, le dispositif électronique ajoute les premières données et/ou la première adresse de téléchargement à la base de données de risque locale.

2. Procédé selon la revendication 1, dans lequel l'obtention, par le dispositif électronique, de premières données du premier paquet d'installation comprend :
lorsque le dispositif électronique détecte qu'une longueur de données de données téléchargées dans le premier paquet d'installation atteint une longueur prédéfinie, la détermination, par le dispositif électronique, des premières données sur la base des données téléchargées.

3. Procédé selon la revendication 2, dans lequel les premières données sont les données téléchargées ou une valeur de hachage des données téléchargées.

4. Procédé selon l'une quelconque des revendications 1 à 3, dans lequel le premier résultat de détection est un résultat de la détection de la première application cible par le serveur d'interception sur la base d'une base de données d'applications à risque et des premières données.

5. Procédé selon la revendication 2 ou 3, le procédé comprenant en outre :
l'envoi (S902), par le dispositif électronique (100), de la première adresse de téléchargement au serveur d'interception, le premier résultat de détection étant un résultat de la détection de la première application cible sur la base des premières données et de la première adresse de téléchargement.

6. Procédé selon la revendication 2 ou 3, le procédé comprenant en outre, avant l'obtention, par le dispositif électronique (100), de premières données du premier paquet d'installation :
l'envoi, par le dispositif électronique (100), de la première adresse de téléchargement au serveur d'interception ; et
la réception, par le dispositif électronique (100), d'un deuxième résultat de détection envoyé par le serveur d'interception, le deuxième résultat de détection étant un résultat de la détection de la première application cible sur la base de la première adresse de téléchargement, et le deuxième résultat de détection indiquant que la première application cible ne présente aucun risque de sécurité.

7. Procédé selon l'une quelconque des revendications 2 à 6, le premier message de notification étant utilisé, si la première application cible présente un risque de sécurité, pour notifier à l'utilisateur que la première application cible présente un risque de sécurité, et le procédé comprenant en outre :
l'interruption, par le dispositif électronique (100), du téléchargement du premier paquet d'installation.

8. Procédé selon la revendication 7, le premier message de notification étant utilisé, si la première application cible présente un risque de sécurité, pour notifier à l'utilisateur que la première application cible présente un risque de sécurité, et le procédé comprenant en outre :
la suppression, par le dispositif électronique (100), des données téléchargées en réponse à une deuxième opération effectuée sur le premier message de notification ; ou
la suppression, par le dispositif électronique (100), des données téléchargées si aucune opération effectuée par l'utilisateur sur le premier message de notification n'est reçue dans un laps de temps prédéfini.

9. Procédé selon l'une quelconque des revendications 1 à 8 dans lequel, si la première application cible ne présente aucun risque de sécurité, le premier message de notification indique que la première application cible ne présente aucun risque de sécurité.

10. Procédé selon l'une quelconque des revendications 1 à 9, le procédé comprenant en outre :
la réception, par le dispositif électronique (100), d'une troisième opération de téléchargement d'une deuxième application cible ;
l'obtention, par le dispositif électronique (100), d'une deuxième adresse de téléchargement de la deuxième application cible en réponse à la troisième opération ;
le téléchargement, par le dispositif électronique (100), d'un deuxième paquet d'installation de la deuxième application cible depuis un deuxième serveur de téléchargement sur la base de la deuxième adresse de téléchargement ;
l'obtention, par le dispositif électronique (100), de deuxièmes données du deuxième paquet d'installation ; et
la délivrance, par le dispositif électronique (100), d'un deuxième message de notification lorsque le dispositif électronique détermine, sur la base des deuxièmes données, de la deuxième adresse de téléchargement et de la base de données de risque locale, que la deuxième application cible présente un risque de sécurité, le deuxième message de notification étant utilisé pour notifier à l'utilisateur que la deuxième application cible présente un risque de sécurité.

11. Procédé selon la revendication 10, le procédé comprenant en outre, lorsque le dispositif électronique (100) détermine, sur la base des deuxièmes données, de la deuxième adresse de téléchargement et de la base de données de risque locale, que la deuxième application cible ne présente aucun risque de sécurité :
l'envoi, par le dispositif électronique (100), des deuxièmes données au serveur d'interception ;
la réception, par le dispositif électronique (100), d'un quatrième résultat de détection envoyé par le serveur d'interception, le quatrième résultat de détection étant un résultat de la détection de la deuxième application cible sur la base des deuxièmes données ; et
la délivrance, par le dispositif électronique (100), d'un troisième message de notification, le troisième message de notification étant utilisé pour porter à la connaissance de l'utilisateur des informations de risque de la deuxième application cible.

12. Dispositif électronique (100), comprenant un ou plusieurs processeurs et une ou plusieurs mémoires, la ou les mémoires étant couplées au(x) processeur(s), la ou les mémoires étant conçues pour stocker du code de programme informatique, le code de programme informatique comprenant des instructions informatiques, et lorsque le ou les processeurs exécutent les instructions informatiques, le dispositif électronique étant activé pour effectuer le procédé selon l'une quelconque des revendications 1 à 11.

13. Support de stockage lisible par ordinateur, comprenant des instructions informatiques, le dispositif électronique, lorsque les instructions informatiques sont exécutées sur un dispositif électronique, étant activé pour effectuer le procédé selon l'une quelconque des revendications 1 à 11.
